# EUROPEAN PATENT APPLICATION

(11) **EP 4 517 525 A1**
(43) Date of publication of application: **05.03.2025**
(21) Application number: 24184360.6
(22) Date of filing: 25.06.2024
(51) Int. Cl.: G06F 9/48

(54) **DEVICE, METHOD AND SYSTEM TO SUPPORT A SYNCHRONOUS DATA FLOW WITH AN IDENTIFICATION OF AN EXECUTABLE TASK**

(30) Priority: 30.08.2023 US 202318240271
(71) Applicant: Intel Corporation, Santa Clara, CA 95054 (US)
(72) Inventor: Leijten, Jeroen, 5096BC Hulsel (NL); Martin Langerwerf, Javier, 27383 Scheessel (DE)
(74) Representative: Samson & Partner Patentanwälte mbB

(57) **Abstract**

Techniques and mechanisms for identifying a next task to be executed for an application which is modeled with a synchronous data flow (SDF) graph. In an embodiment, the SDF graph comprises nodes which each represent a different respective task, wherein the nodes variously exchange, via channels, tokens which represent data for operations of the application. A manager circuit manages and provides access to schedule registers which provide state information at a node-specific level of granularity. For a given node, a corresponding schedule register provides a status parameter which identifies whether the given node is currently qualified to be executed. The status parameter is based on one or more channel registers which each provide state information at a channel-specific level of granularity. In another embodiment, a processor comprises circuitry to send to the manager circuit a request to identify, based on the schedule registers, a next task to be executed.

## Description

### RELATED APPLICATIONS

This patent application is related to U.S. Patent Application Serial No. 18/345,280 titled "HARDWARE ACCELERATION FOR DATA-DRIVEN MULTI-CORE SIGNAL PROCESSING SYSTEMS," filed on June 30, 2023, by Intel Corporation, and U.S. Patent Application Serial No. 17/958,108 titled "TECHNIQUES TO REDUCE POWER CONSUMPTION FOR A DISTRIBUTED COMPUTATIONAL MODEL MAPPED ONTO A MULTI-PROCESSING NODE SYSTEM," filed on September 30, 2022, by Intel Corporation, which are assigned to the assignee of the presently claimed subject matter and herein incorporated by reference.

### BACKGROUND

### 1. Technical Field

This disclosure generally relates to synchronous data flow systems and more particularly, but not exclusively, to the identification of a task as being ready for execution.

### 2. Background Art

A synchronous data flow (SDF) graph is a special case of Kahn process networks (KPNs), which can be used to describe signal processing systems that transform streams of data using processes (e.g., processing nodes) that are connected via unbounded first-in- first-out (FIFO) communication channels (arcs) with each other. Typically, writes routed via communication channels modeled in an SDF graph are non-blocking, while reads to the communication channels are blocking. For example, if a processing node requires data from one or more preceding processing nodes and the communication channel is empty, a process or workload usually remains blocked until a required amount of data (e.g., token(s)) is available in the communication channel. For a communication channel, a FIFO can only be read by a single processing node, and multiple processing nodes are not allowed to write to a single FIFO. The process or workload modeled to an SDF graph needs to be deterministic with regard to a data flow. For example, each processing node is arranged to produce a same amount of data (e.g., token(s)), regardless of the amount of data input.

### BRIEF DESCRIPTION OF THE DRAWINGS

The various embodiments of the present invention are illustrated by way of example, and not by way of limitation, in the figures of the accompanying drawings and in which:
FIG. 1 illustrates a block diagram of a computer system including a processor having a core with a synchronous data flow (SDF) circuit and an SDF manager according to an embodiment.
FIG. 2 shows a flow diagram illustrating features of a method to identify an executable task with a SDF circuit according to an embodiment.
FIG. 3 illustrates a block diagram of a memory partitioned into data flow buffers for hierarchical blocks of SDF data according to an embodiment.
FIG. 4 illustrates a task, a corresponding application graph for that task, and a computing system including a SDF functional circuit and an SDF manager circuit to implement the corresponding application graph according to an embodiment.
FIG. 5 illustrates a block diagram of an SDF manager circuit according to an embodiment.
FIG. 6 illustrates example formats for address decomposition and task identification at a protocol interface (PI) of an SDF manager according to an embodiment.
FIG. 7 illustrates an information command encoding for SDF functional circuit (SDFFC) to SDF manager communications according to an embodiment.
FIG. 8 illustrates example channel registers of an SDF manager for a single channel according to an embodiment.
FIG. 9 shows a table diagram illustrating features of schedule registers for a single task according to an embodiment.
FIG. 10 illustrates a state machine to provide status transitions for a task according to one embodiment.
FIG. 11 illustrates input ports and output ports of a SDFFC according to an embodiment.
FIG. 12 illustrates an exemplary system.
FIG. 13 illustrates a block diagram of an example processor that may have more than one core and an integrated memory controller.
FIG. 14A is a block diagram illustrating both an exemplary in-order pipeline and an exemplary register renaming, out-of-order issue/execution pipeline according to examples.
FIG. 14B is a block diagram illustrating both an exemplary example of an in-order architecture core and an exemplary register renaming, out-of-order issue/execution architecture core to be included in a processor according to examples.
FIG. 15 illustrates examples of execution unit(s) circuitry.
FIG. 16 is a block diagram of a register architecture according to some examples.

### DETAILED DESCRIPTION

Embodiments discussed herein variously provide techniques and mechanisms for a task of an application, where such application is represented by a synchronous data flow (SDF) graph, to be identified as being currently qualified to be a next task for execution.

Multi-core digital signal processing is one example of a technology which benefits greatly from data-driven multi-core communication and synchronization mechanisms, such as those which are represented conceptually using a synchronous data flow (SDF) model. In such a model, an application is described as a graph of nodes that consume and produce data, where such data is abstracted as tokens across node input terminals and node output terminals that are connected via directed arcs. Nodes self-schedule and synchronize based on availability of sufficient tokens on each input terminal of a given node, and of sufficient space for tokens on each output terminal of said node. This availability condition is called the "SDF firing rule" for a node. Implementing synchronization consistent with this firing rule requires a protocol, that we will refer to as SDF protocol. Although the SDF protocol itself is kept as simple as possible, the overhead of carrying out the protocol fully in software (SW) or firmware (FW) running on embedded programmable processors becomes prohibitive for high-performance, high-throughput digital signal processing workloads. An example of such workloads is those for digital front-end (DFE) processing for software defined radio.

Some embodiments variously facilitate the execution of an application, which is modeled with a SDF graph, by providing an efficient identification of a graph node as being qualified for execution - e.g., where the node is identified as a next node to be executed. In some cases, the identification of a next task to be executed tends to be associated with excessive overhead - e.g., where the number of nodes to be scheduled on a given processor is relatively great, and/or where the required scheduling rates of nodes differ from each other.

To mitigate the effect of such overhead, some embodiments variously enable an agent (e.g., implemented with executing software) to explicitly request that a SDF management circuit - referred to herein as a "SDF Manager" - identify the next qualified node. As used herein, the term "qualified node" refers to a node for which a respective SDF firing rule is currently satisfied, and the term "next qualified node" refers to a qualified node which has been scheduled (or is to be scheduled) as a next node to be executed.

For example, some embodiments variously support at least one type of request - referred to herein as a "node identification request" or a "task identification request" - for a SDF Manager to evaluate the status of some or all nodes of a given SDF graph, to determine which node or nodes (if any) currently satisfy their respective SDF firing rule, and are thus qualified for execution. Where multiple qualified nodes are detected, the SDF manager is to select one such qualified node, and to identify the selected node, in a reply to the node identification request, as being the next qualified node. In this particular context, it is to be understood that "node identification," as used herein, is equivalent to "task identification" (unless otherwise indicated) - e.g., at least insofar as the identifying of one particular node of a SDF graph also identifies the task which is represented by that node.

In various embodiments, a SDF Manager and a requesting agent, which communicates with the SDF Manager, support a protocol which includes one type or another type - for example, both types - of a node identification request (and of a reply to said node identification request). These two types are referred to herein as "blocking" and "non-blocking," insofar as they variously accommodate whether (or not) operations of the requesting agent - or operations of some other resource which is associated with the requesting agent - are to be blocked until a next qualified node is identified.

In some embodiments, a SDF Manager performs node identification according to a blocking mode by sending a reply to a node identification request only after the SDF Manager has identified a next qualified node based on that node identification request. For example, the SDF Manager does not send any reply which communicates to the requestor agent that no node is currently qualified. Such a blocking mode facilitates the requestor agent and/or other resources to stop, slow or otherwise reduce operations (e.g., for power savings) until a SDF node becomes qualified for execution.

Alternatively or in addition, a SDF Manager performs node identification according to a non-blocking mode by sending a reply to a node identification request regardless of whether the SDF Manager has identified a next qualified node based on that node identification request. For example, under some conditions, the SDF Manager sends a reply which communicates to the requestor agent that no node is currently qualified. In one such embodiment, an additional reply is automatically sent once a SDF node becomes qualified for execution.

In some embodiments, a SDF Manager hardware selects one qualified node, from among multiple nodes which are currently qualified, as the next node to be executed. Such selection is performed, for example, based on a relative prioritization of some or all nodes with respect to each other. In an embodiment, node prioritizations are variously configured at an initialization of a multi-processor system - e.g., wherein some or all such prioritizations are subject to being variously raised or lowered during run time execution with the multi-processor system. Accordingly, some embodiments accelerate SDF management functionality with circuit hardware which improves the efficiency of execution scheduling.

The technologies described herein may be implemented in one or more electronic devices. Non-limiting examples of electronic devices that may utilize the technologies described herein include any kind of mobile device and/or stationary device, such as cameras, cell phones, computer terminals, desktop computers, electronic readers, facsimile machines, kiosks, laptop computers, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultra-mobile personal computers, wired telephones, combinations thereof, and the like. More generally, the technologies described herein may be employed in any of a variety of electronic devices including circuitry to support operation of a multi-processor system.

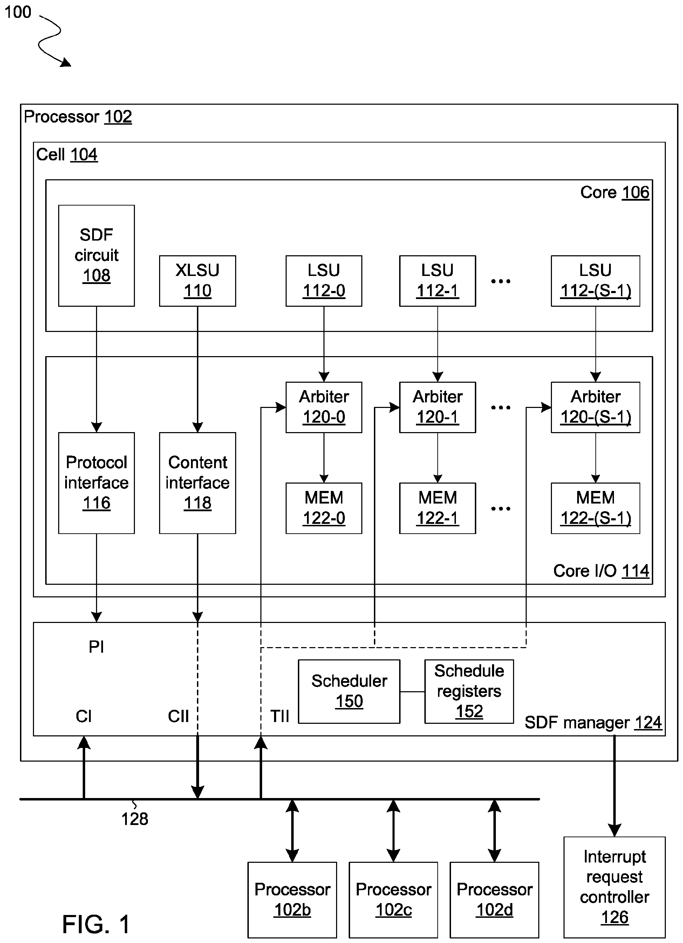

FIG. 1 illustrates a block diagram of a computer system 100 including a processor 102 having a core 106 with a synchronous data flow (SDF) circuit 108 and an SDF manager 124 (e.g., circuit) according to one example embodiment. In certain embodiments, the computer system 100 includes multiple processors (e.g., processor 102b, processor 102c, processor 102d, etc.). In certain examples, one or more other processors (e.g., processor 102b, processor 102c, processor 102d, etc.) include one or more of (e.g., all of) the depicted components of processor 102 in FIG. 1. In certain examples, a processor communicates with one or more of the other processors via system bus 128, e.g., to jointly execute a SDF graph.

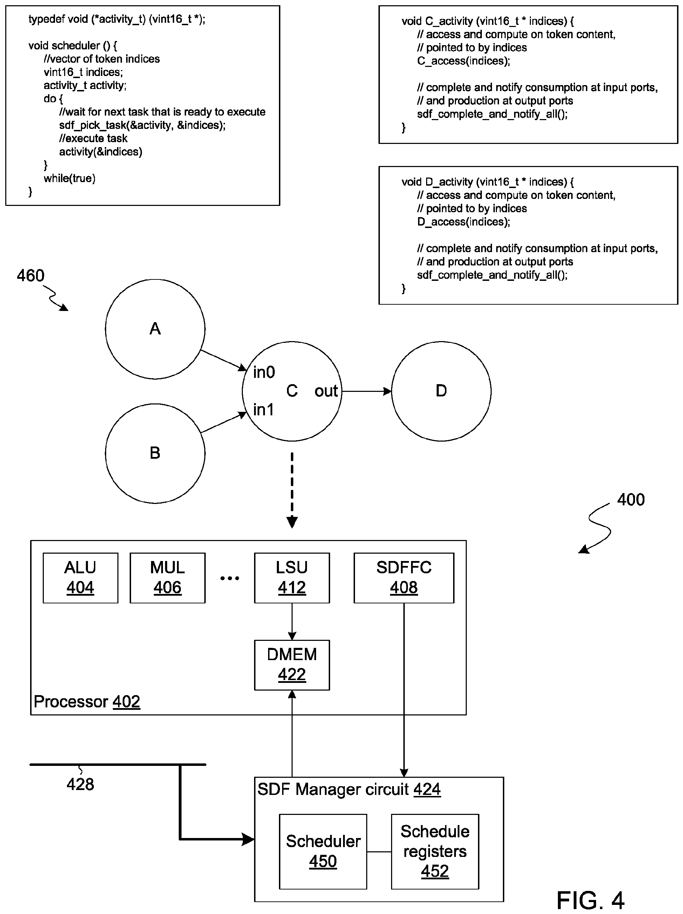

In certain examples, processor 102 includes a cell 104 that includes the core 106 and the input/output 114 (e.g., control circuitry) for core 106. In certain examples, an SDF circuit 108 is included, e.g., as an instance of SDF functional circuit 408 discussed in reference to FIG. 4. In certain examples, SDF manager 124 (e.g., a circuit) includes a plurality of interfaces with core I/O 114, e.g., as discussed below.

In certain examples, SDF circuit 108 is coupled to a protocol interface (PI) of SDF manager 124, e.g., via a primary protocol interface 116 of core I/O 114. In certain examples, a first load store unit (XLSU) 110 of core 106 is coupled to a content initiator interface (CII) of SDF manager 124, e.g., via a primary content interface 118 of core I/O 114. In certain examples, core 106 further comprises one or more (e.g., other) load/store units 112-0 to 112-(S-1), e.g., where S is the number of LSUs. For example, in certain embodiments, the one or more other LSUs 112 are each coupled to a respective arbiter 120 (e.g., circuit) to allow access to a corresponding memory 122-0 to 122-(S-1).

In certain examples, an interrupt request controller 126 is coupled to the SDF manager 124, e.g., to allow the SDF manager 124 to signal an error (e.g., via a corresponding interrupt).

In certain examples, an application is abstracted as one or more synchronous data flow (SDF) graphs, e.g., wherein nodes represent tasks that repetitively invoke algorithms on streaming data (e.g., from memory 122), and arcs represent the data communication paths between such nodes. In certain examples, such an abstraction (e.g., SDF model) provides a good fit for digital signal processing for a broad class of applications.

In certain examples, data communication is abstracted by modelling hierarchical blocks of data held in buffers, as tokens residing on arcs in the SDF graph.

Some embodiments variously improve upon existing SDF management techniques by providing techniques and/or mechanisms with which a software (or other) agent is able to explicitly request a SDF Manager to identify a next node as being ready for execution. In various embodiments, a SDF Manager supports a non-blocking functionality for cases where, for example, a requestor agent intends to continue operations even in a case where no next node which is currently available to be executed. In one such embodiment, non-blocking functionality is supported by a SDF Manager which is able to reply to such a request - referred to herein as a "task identification request" or a "node identification request" - with a message which specifies whether or not some next node is currently available to be executed. By way of illustration and not limitation, such a message returns a Boolean value which identifies whether any node is currently available for execution (and, for example, returns an identifier of a currently available node, if any).

Alternatively or in addition, a SDF Manager supports a non-blocking functionality for cases where, for example, a requestor agent intends to delay, forego or otherwise prevent operations at least until a next node which available to be executed. In one such embodiment, blocking functionality is supported by a SDF Manager which defers providing any response to a given node identification request until the identification of a node as being currently available for execution. For example, the requestor agent is aware that no such response will be provided until an available node has been identified. In some embodiments, the node identification request specifies or otherwise indicates to a SDF Manager whether a reply to said request is to be provided to facilitate a particular one (i.e., rather than the other one) of blocking functionality or non-blocking functionality.

In some embodiments, a SDF Manager includes or otherwise has access to one or more registers (referred to herein as "schedule registers"), or any of various other suitable resources, which are to act as a repository of status information that is updated during the execution of various nodes of an SDF graph. For example, the SDF Manager includes, is coupled to access, or otherwise operates based on logic - e.g., comprising hardware, firmware and/or executing software - which maintains the status information for a given node based on the current state of the one or more input arcs and/or the the one or more output arcs for said node. By way of illustration and not limitation, the such logic (referred to herein as a "scheduler") maintains the status information for a given node based on other arc state information including, for example, a total number of tokens in a given input arc, an amount of available space in an output arc, or the like. Such arc state information is provided, for example, in one or more registers (referred to herein as "channel registers"), or any of various other suitable resources. In response to a node identification request, the SDF Manager accesses one or more schedulers to determine which (if any) node of a SDF graph represents a task which currently qualifies to be executed.

Although some embodiments are not limited in this regard, a SDF Manager is able to select one node from among multiple nodes which are currently available for execution - e.g., where such selection is based on a relative prioritization of multiple nodes of a SDF graph. In one such embodiment, priorities are configured at some initialization phase for some or all nodes of a SDF graph - e.g., wherein some or all such priorities are subject to being variously raised or lowered at different times during execution of the application(s) represented by the SDF graph. As such, various embodiments provide acceleration hardware to schedule the execution of different nodes running on the same processor.

In various embodiment, SDF management functionality (e.g., including node identification request functionality) is supported across two or more processors of system 100. By way of illustration and not limitation, processor 102 sends a load/store operation to an external device - e.g., via the CII interface of SDF manager 124. In one such embodiment, an SDF manager of the external device (e.g., where the external device is one of processors 102b, 102c, 102d) signals to SDF manager 124 - via system bus 128 - that the load/store operation (or any of various other operations) has been performed, or alternatively, has been delayed. Alternatively or in addition, SDF manager 124 sends to the SDF manager of the external device a node identification request on behalf of a requestor agent of core 106 - e.g., where SDF manager 124 receives a reply which supports blocking functionality or, alternatively, non-blocking functionality for the requestor agent of core 106. Accordingly, such embodiments variously accelerate or otherwise provide a SDF protocol which facilitates data-driven, multi-core synchronization and task-scheduling.

Some embodiments variously enable an agent (such as one provided with SDF circuit 108 or a similar circuit of another processor) to explicitly request that SDF manager 124 identify a next qualified node to be executed. For example, some embodiments variously support a request - which the PI of SDF manager 124 receives, for example, from protocol interface 116 - for SDF manager 124 to evaluate the status of some or all nodes of a SDF graph. For example, a scheduler 150 (or other suitable circuitry) of SDF manager 124 accesses one or more registers - e.g., including the illustrative schedule registers 152 shown - based on a node identification request, to determine which node or nodes, if any, currently satisfy their respective SDF firing rule, and are thus qualified for execution. In some embodiments, where multiple qualified nodes are detected, scheduler 150 selects one such qualified node, and (directly or indirectly) identifies the selected node to SDF circuit 108, in a reply to the node identification request, as being a next qualified node.

In various embodiments, schedule registers 152 are updated by scheduler 150, during run-time execution of an application, with state information which specifies the respective qualification states of SDF graph nodes. In one such embodiment, updating of schedule registers 152 is performed based on other registers (not shown) - referred to herein as "channel registers" - which provide other state information at a channel-specific level of granularity. Some embodiments improve the efficiency of node scheduling by mitigating overhead which would otherwise be needed to poll such more granular state information of the channel registers.

In various embodiments, SDF manager 124 and SDF circuit 108 (and/or a similar circuit of one of processors 102b, 102c, 102d) support a protocol which includes a message type - "sdf_pick_task" herein - which is a blocking version of a node identification request. In an illustrative scenario according to one embodiment, SDF manager 124 sends a reply to a sdf_pick_task message only after scheduler 150 has identified a next qualified node based on that sdf_pick_task message (e.g., where SDF manager 124 does not send any reply which communicates to SDF circuit 108 that no node is currently qualified).

Alternatively or in addition, the protocol supports another message type - "sdf_find_task" herein - which is a non-blocking version of a node identification request. In one such embodiment, SDF manager 124 sends a reply to a sdf_find_task message regardless of whether scheduler 150 has identified a next qualified node based on that sdf_find_task message. For example, under some conditions, SDF manager 124 sends a reply to the sdf_find_task message which communicates to the requestor agent that no node is currently qualified. In one such embodiment, an additional reply to the same sdf_find_task message is automatically sent once scheduler 150 determines that a node has become qualified for execution.

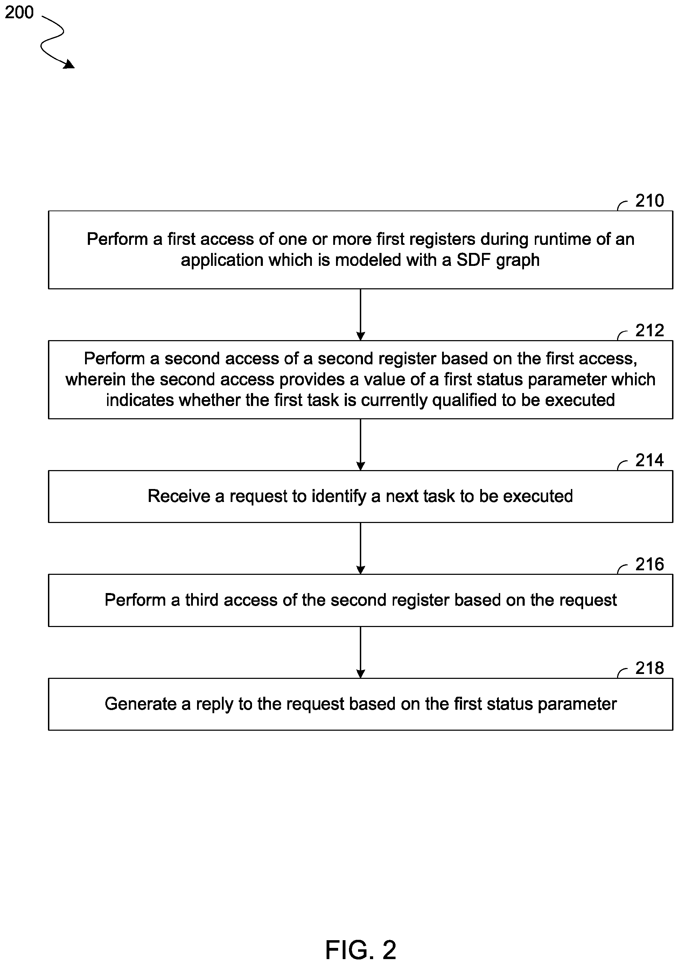

FIG. 2 shows features of a method 200 to identify an executable task with a SDF Manager circuit according to an embodiment. Method 200 is performed with a SDF Manager circuit - e.g., SDF manager 124 - which facilitates the modeling of an application with a SDF graph that comprises nodes that variously communicate with each other via channels. For example, for a given one such node, one or more "input" channels each provide respective data to a respective input terminal of the node. Alternatively or in addition, one or more other "output" channels are each to receive respective data from a respective output terminal of the node.

In one such embodiment, runtime execution of the application is facilitated with registers ("channel registers" herein) which variously define, specify or otherwise indicate state of some or all channels. By way of illustration and not limitation, a given channel of the SDF graph corresponds to a respective set of one of more first registers (channel registers) which are to specify or otherwise indicate state of that channel (and, accordingly, state of a corresponding terminal with which that channel is to communicate). In various embodiments, some or all channel registers provide respective state information at a channel-specific level of granularity. During runtime of an application which is represented by the SDF graph, the respective sets of channel registers for multiple channels are subject to being variously updated - e.g., based on messages which include, specify or otherwise indicate various token exchanges using some or all such channels.

In one such embodiment, a given channel corresponds to one type of channel register (referred to herein as a STATUS register) which, at various times, is to indicate any of multiple possible channel states. For example, a first such channel state (referred to herein as an ARMED state) indicates that the corresponding channel currently satisfies a condition for accommodating execution of a task which is represented by a corresponding node. However, a second such channel state (referred to herein as an UNARMED state) indicates that the corresponding channel does not currently satisfies such a condition. In one example embodiment, an input channel (i.e., one which is to provide tokens to an input terminal of a corresponding node) is to be in an ARMED state where it is determined that the input channel currently has enough tokens to accommodate - e.g., to enable, at least in part - a next execution of the task which is represented by that corresponding node. By contrast, an output channel (i.e., one which is to receive tokens from an output terminal of a corresponding node) is to be in an ARMED state where it is determined that the output channel currently has enough available space to accommodate - e.g., to enable, at least in part - a next execution of the task which is represented by that corresponding node.

In one such embodiment, runtime execution of the application is further facilitated with other registers ("schedule registers" herein) which variously define, specify or otherwise indicate state of some or all nodes. By way of illustration and not limitation, a given node of the SDF graph corresponds to a respective set of one of more second registers (schedule registers) which are to specify or otherwise indicate state of that node. In various embodiments, some or all schedule registers provide respective state information at a node-specific level of granularity. During runtime of an application which is represented by the SDF graph, the respective sets of schedule registers for multiple nodes are subject to being variously updated - e.g., where updating of a schedule register for a given node is performed based on the current state of each channel which is to communicate with said node.

In one such embodiment, a given node corresponds to one type of schedule register (referred to herein as a QUALIFY register) which, at various times, is to indicate any of multiple possible node states. A first such node state (referred to herein as a QUALIFIED state) indicates that the node is currently qualified to be executed. For example, a QUALIFIED state indicates that, for each channel which is coupled to a terminal of the node in question, the channel currently satisfies a respective condition for accommodating execution of a task which is represented by that node. By contrast, a second such node state (referred to herein as an UNQUALIFIED state) indicates that the node in question is not currently qualified to be executed. For example, an UNQUALIFIED state indicates that, for at least one channel which is coupled to a terminal of the node in question, the channel does not currently satisfy a respective condition for accommodating execution of the task.

In some embodiments, a SDF manager circuit operates, during runtime of an application, to maintain and/or provide access to a schedule register for at least one node of an SDF graph. In one such embodiment, the SDF manager circuit provides access (by a firmware agent, a software agent, or the like) to any of multiple sets of one or more schedule registers, where each such set corresponds to a different respective node of a SDF graph.

As shown in FIG. 2, method 200 comprises (at 210) performing a first access of one or more first registers - that is, one or more channel registers - during a runtime of an application. In an embodiment, the application is modeled with a SDF graph which comprises multiple nodes which each represent a respective task of the application, and which variously communicate during runtime via channels of the SDF graph. For example, one or more channels are each to communicate via a first node of the multiple nodes, wherein the one or more first registers each correspond to a different respective channel of the one or more channels. In an embodiment, the one or more first registers are STATUS registers, wherein the first access at 210 comprises a SDF Manager circuit performing reads to determine, for each channel of the one or more channels, whether the channel is currently able to accommodate an execution of a first task of the application.

Based on the first access, method 200 (at 212) performs a second access of a second register - that is a schedule register - which corresponds to the first node. In an embodiment, the second register is a QUALIFY register, wherein the second access at 212 performs a write or other suitable operation to provide a value of a first status parameter of the second register, wherein the value identifies whether the first task is currently qualified to be executed.

Method 200 further comprises (at 214) receiving a request - during the runtime of the application - to identify a next task to be executed. For example, the request is received from SDF circuit 108 or another suitable SDF functional circuit of the multi-processor system - e.g., on behalf of a firmware agent or, alternatively, a software agent. Method 200 further comprises (at 216) performing a third access of the second register based on the request which is received at 214. In an embodiment, the third access reads the current value of the first status parameter to determine whether the first task is currently qualified to be executed.

Method 200 further comprises (at 218) generating a reply to the request based on the first status parameter. For example, the reply is communicated by SDF manager 124 to SDF circuit 108 or any of various other suitable requesting agents. In some embodiments, method 200 further comprises, based on the request, performing another access of a third register (that is, another type of schedule register referred to herein as an ACTIVITY register) which includes an identifier of a start address of the first task. For example, this other access is to read or otherwise determine the identifier of the start address, which is provided in the reply at 218 to indicate that the first task is a next task to be executed. In another embodiment, the reply provides a unique task identifier for a next qualified task - e.g., wherein the requesting agent will need to access other information, based on the task identifier in the reply, to determine an address for executing the next qualified task.

In an illustrative scenario according to one embodiment, the request received at 214 is a "blocking" type of request, wherein (in some situations) the reply generated at 218 indicates a failure to identify any task as currently being qualified to be executed. In an alternative scenario, the request received at 214 is of a "non-blocking" type, wherein (in some situations) method 200 delays a generation of the reply - e.g., at least until a node is identified as being qualified to be executed. For example, method 200 delays sending the reply at 218 based on a failure to identify any node as currently being qualified to be executed.

In some embodiments, method 200 performing the third access at 216 comprises accessing, based on the request, each of multiple QUALIFY registers which correspond to different respective nodes of the SDF graph. For example, the multiple QUALIFY registers each comprise a respective status parameter which indicates whether the corresponding node is qualified to be executed. In some situations, accessing the multiple QUALIFY registers results in the SDF Manager circuit detecting a condition wherein multiple nodes are each currently qualified to be executed. In one such embodiment, method 200 further performs, based on the condition, a selection of the first node (for example) from among the multiple nodes - e.g., wherein the reply identifies the first node based on the selection. In an embodiment, selection of the first node is performed based on a relative prioritization of the multiple nodes with respect to each other - e.g., wherein schedule registers variously provide respective prioritization information which indicates the relative prioritization. In some embodiments, method 200 further comprises other operations (not shown) to change the relative prioritization during runtime of the application - e.g., wherein such other operations are based on information which indicates whether a priority of a particular node (such as the first node) is to be raised or lowered.

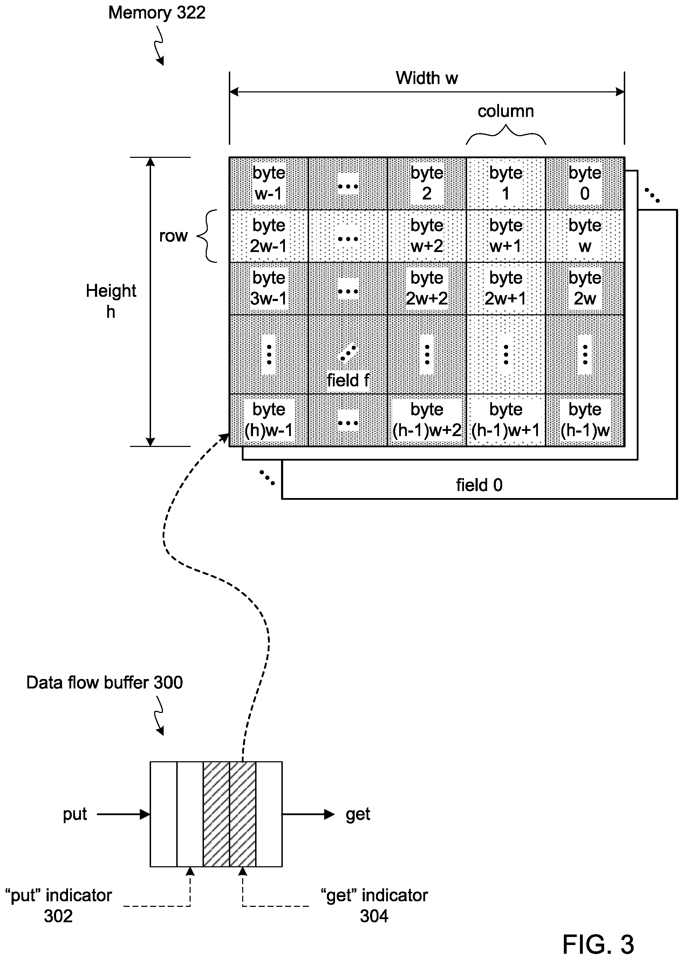

FIG. 3 illustrates a block diagram of a memory 322 partitioned into data flow buffers (e.g., shown with example data flow buffer 300) for hierarchical blocks of SDF data according to an embodiment. In an embodiment, memory 322 corresponds functionally to one or more of memories 122.

In certain embodiments, an exchange of data between tasks is abstracted by the use of tokens which variously travel across arcs in an SDF graph in a first-in, first-out (FIFO) order, e.g., from buffer to buffer with nodes performing respective computations in between. In certain embodiments, indicators take care of maintaining buffer read state (e.g., via a put indicator 302) and buffer write state (e.g., via a get indicator 304) at the granularity of such tokens. In certain embodiments, the get indicator 304 is maintained and updated by a consuming node and/or the put indicator 302 is maintained and updated by a producing node. However, in certain embodiments, to determine the number of tokens or token spaces present in a buffer (e.g., the arc state), both the get indicator and the put indicator are required. Therefore, to ensure that both the producer and the consumer can assess the arc state, in certain embodiments, the indicators are exchanged between each pair of terminals connected at either end of an arc in the SDF graph. This exchange is referred to as indicator sharing (or referred to as "remote indicator writes"). In certain embodiments, exchanging indicators enable processors to self-schedule and self-synchronize their tasks.

In certain embodiments, multiple core (multi-core) digital signal processing systems benefit greatly from data-driven multi-core (e.g., multi-processor) communication and synchronization mechanisms, e.g., those conceptually defined by a synchronous data flow (SDF) model. In certain SDF models, applications (e.g., computing programs) are described as graphs of nodes that consume and produce data abstracted as tokens across node input terminals and node output terminals that are connected via directed arcs. In certain embodiments, nodes self-schedule and synchronize based on availability of sufficient (e.g., space for) tokens on all relevant node terminals. In certain embodiments, implementing this synchronization mechanism is via an SDF protocol. In certain embodiments, an SDF protocol includes three key synchronization phases, known as (1) "request", (2) "completion", and (3) "notification".

Some embodiments are variously directed at least in part to an SDF protocol acceleration across multiple protocol phases - e.g., in contrast to only providing acceleration for a subset of SDF protocol phases, doing so only in limited form, and/or doing so in a way that complicates SW debug, examples herein - which facilitates simplified programming, and offers full observability for debug.

Certain embodiments herein provide acceleration to a programming model, e.g., where synchronous data flow is applied at the coarse-grain task level (for example, in contrast to being applied at the fine-grain operation level). In certain embodiments, nodes in a synchronous data flow graph represent entire algorithms (e.g., or tasks). In certain embodiments, each node is mapped to a single processor in a multi-processor system. In certain embodiments, a node is mapped to a central processing unit (CPU), micro-controller, digital signal processor (DSP), application-specific instruction set processor (ASIP), hardware accelerators, and/or I/O peripherals. In certain embodiments, the arcs in the graph thus model the flow of data between such tasks running on different processors, at the level of coarse-grain (multi-dimensional) blocks of data. In the example embodiment shown, a given token in data flow buffer 300 represents some or all of a three-dimensional (3D) block of data, wherein multiple fields of such a 3D block each represent a respective two-dimensional (2D) data block. For example, a height h of a given 2D data block comprises multiple rows, wherein a width w of said 2D data block comprises multiple columns.

In certain embodiments, such arcs are implemented as communication buffers which (for example) include hardware FIFOs, software buffers in regular memory-mapped memory, and/or volatile I/O ports. In certain embodiments, signal processing tasks mapped to heterogeneous multi-processor systems use significant low-level programming to ensure proper buffer setup, communication path setup, and synchronization between tasks mapped to different processors. This is further complicated, if target processors and their associated buffer implementations are of a different variety in a heterogenous multi-processor system.

Certain embodiments provide or otherwise use an application programming interface (API) which, for example, accommodates the use of various low-level primitives in different cores of a heterogeneous multi-core systems. In one such embodiment, an API enables the implementation of SDF functionality using a programming model and/or a synchronization protocol which is implemented in software of firmware.

With both a 'get' indicator and a 'put' indicator available for a given terminal of a node, a SDF Manager is able to determine, at least in part, whether a firing rule for that node is satisfied. Such a SDF Manager is able to determine whether sufficient tokens are available at each input terminal of the node in question, and whether sufficient token spaces are available at each output terminal of said node. For example, in various embodiments, the SDF Manager includes, has access to, or otherwise operates based on registers - referred to herein as "channel registers" - which provide status information, some or all of which is at a channel-specific (and thus, terminal-specific) level of granularity. One or more sets of channel registers each correspond to a different respective channel of a SDF graph - e.g., where one or more sets of channel registers each correspond to a respective channel for one node, and where one or more other sets of channel registers each correspond to a respective channel for a different node. In one such embodiment, a given set of channel registers comprises one register (referred to herein as a STATUS register) which, during runtime execution, is maintained current by the SDF Manager. For example, the SDF Manager monitors messages to and/or messages from SDF circuit 108 (and/or other such agents) and, based on such monitoring, stores to a STATUS register an up-to-date value which identifies whether or not the corresponding channel has sufficient tokens - or, alternatively, has sufficient space - to accommodate a next firing with the node which communicates via the channel.

In some embodiments, SDF manager 124 and a requesting agent - such as SDF circuit 108 or a similar circuit of one of processors 102b, 102c, 102d - support an interface (e.g., a protocol interface, an application programming interface, or the like) by which the requesting agent is able to access status information from a given one or more of the channel registers. By way of illustration and not limitation, such an interface supports one type of message ("sdf_check" herein) which is a request from a SDF manager to access status information for a specific terminal of a particular node that, for example, is identified in the sdf_check message. Alternatively or in addition, the interface supports another type of message ("sdf_check_all" herein) which is a request from a SDF manager to access status information for all terminals of a particular node that, for example, is identified in the sdf_check_all message.

Thus, by issuing a sdf_check message, a sdf_check_all message, etc. for a specified node, a software (or firmware) agent is able request the SDF Manager to determine whether a firing rule for that specified node is currently satisfied. Based on the SDF Manager's reply to the request, the agent can (for example) call the task program belonging to the node that was checked and determined ready for execution, or check whether another node is ready if the node in question is not. However, in the absence of additional functionality, such messages usually require the firmware (or software) agent to execute a "polling" scheduling loop - e.g., wherein all nodes that are assigned to the same processor are repeatedly checked for execution readiness. These polling requirements tend to result in significant performance overhead, in certain situations.

To mitigate the need for such overhead, some embodiments variously provide supplemental SDF Manager circuit functionality to maintain and access additional status information which is based on channel register information. For example, such additional status information is provided by circuit hardware at a node-specific (and thus, task-specific) level of granularity which is higher - e.g., more abstract - than a channel-specific level of granularity. In certain embodiments, this type of additional status information is variously maintained up-to-date in schedule registers which each corresponds to a respective node (and thus, to a respective task represented by said node). In one such embodiment, some or all such schedule registers are accessible to a requesting agent - by sending to a SDF Manager a sdf_pick_task message or a sdf_pick_task message (e.g., where the requesting firmware or software agent executes a sdf_pick_task operation or a sdf_pick_task operation to send such a message) to request an identification of a next qualified node.

FIG. 4 illustrates a task ("C"), a corresponding application graph 460 (with nodes A, B, C, and D) for that task, and a computing system 400 including a SDF functional circuit (SDFFC) 408 and an SDF manager circuit 424 to implement the corresponding application graph according to an embodiment. In certain embodiments, the SDFFC 408 and/or SDF manager circuit 424 facilitate the identification of a particular node of a SDF graph (and, correspondingly, the identification of a task which corresponds to said node) as being currently qualified (or "available") to be executed. In one such embodiment, SDFFC 408 and/or SDF Manager circuit 424 further provide acceleration for multiple SDF protocol phases at a node level (e.g., instead of at an individual terminal level), while maintaining and further improving power savings when tasks are not ready for execution.

As shown in FIG. 4, system 400 comprises a system bus 428 and multiple processors - such as the illustrative processor 402, and one or more other processors (not shown) - which are coupled to each other via system bus 428. Processor 402 comprises memory resources (DMEM) 422 which are accessible by one or more local resources - such as the illustrative load store unit (LSU) 412 shown) - and, for example, by one or more other processors via SDFFC 408. In certain embodiments, a core of processor 402 comprises LSU 412 and any of various other suitable functional blocks, such as an arithmetic logic unit (ALU) 404, a multiplier circuit (MUL) 406 and/or the like.

In an embodiment, processor 402 and system bus 428 correspond functionally to processor 102 and system bus 128 (respectively) - e.g., wherein SDFFC 408 and SDF Manager circuit 424 correspond functionally to SDF circuit 108 and SDF manager 124 (respectively). In the example embodiment shown, SDF manager circuit 424 is external to processor 402 - e.g., wherein any access to DMEM 422 by another processor of system 400 is via system bus 428. In one such embodiment, SDF manager circuit 424 is coupled to variously provide SDF management functionality for two or more of the processors of system 400. However, in an alternative embodiment (such as that illustrated by system 100) SDF manager circuit 424 is internal to processor 402 - e.g., wherein SDF manager circuit 424 is configured to snoop communications to access DMEM 422, and to variously update channel registers and schedule registers (not shown) based on such communications.

Advantages to using SDFFC 408 and/or SDF Manager circuit 424 - e.g., as compared to conventional SDF techniques - include an efficient API with relatively low code overhead, increased acceleration, and thus less performance overhead, full observability, and debug. This simplifies software development and improves performance and overall quality. Certain embodiments herein use the SDFFC 408 and/or SDF Manager circuit 424 to enable performance efficiencies with multi-core programming APIs, e.g., for data driven multi-core signal processing systems.

In certain embodiments, the SDFFC 408 behaves as a special load/store unit and is connected, via a (e.g., "regular") memory-mapped interface located in the memory & I/O subsystem (e.g., in core I/O 114) of the processor 102, to SDF Manager 124 (e.g., device), e.g., located external to the processor 102.

Turning again to FIG. 4, the depicted SDF Manager circuit 424 includes a plurality of interfaces, e.g., including some or all of interfaces CI, PI, CII, and TII. In certain embodiments, a (e.g., single) Configuration Interface (CI) is used by processor 402 in the system 400 to configure the device. In certain embodiments, for debug purposes, some or all relevant information of SDF manager circuit 424 can be observed or dumped through the same interface.

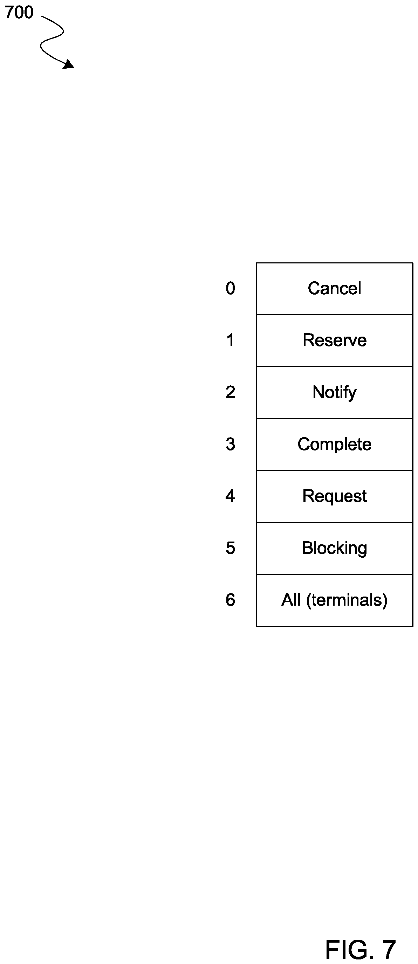

In certain embodiments, a (e.g., single) Protocol Interface (PI) of processor 402 is used to perform the different (e.g., "key") phases (e.g., request, complete, and notify phases) of the SDF synchronization protocol via custom operations issued on the SDFFC 408. In certain embodiments - for example, through load operations issued on SDFFC - the PI provides standard memory-mapped read-only access to the internal register map of the SDF Manager circuit 424, e.g., for the purpose of obtaining specific node and terminal properties used for task scheduling and processing, or for debug and observability from within firmware running on the processor. In certain embodiments, in the SDF protocol "request" phase, the PI interface allows checking the complete SDF firing rule of a node using a single SDFFC custom load operation. In certain embodiments, this check can be blocking or non-blocking and will assess whether sufficient tokens or spaces are available on all terminals of the node, in order for the node to execute (e.g., "fire"). In certain embodiments, for the SDF protocol "completion" and "notification" phases, the interface allows combined completion and notification on all terminals of a node using a single SDFFC custom store operation. In certain embodiments, in response to this operation, all local (e.g., locally maintained) indicators across all terminals of the node will be updated and the updated values will be shared with the remote terminals connected to the remote ends of the arcs connected to each terminal. This effectively accelerates indicator updating and sharing as explained above. In certain embodiments, the SDFFC and SDF manager distinguish between custom load and custom store operations using dedicated side-band information bits (e.g., as shown in FIG. 7) passed across the PI interface with each load/store operation.

In certain embodiments, a (e.g., single) Content Initiator Interface (CII) of processor 402 is used to pass (e.g., "normal") data loads and stores initiated by the processor 402 to the rest of the system 400. In certain embodiments, the CII interface allows the SDF Manager circuit 424 to inject additional transfers initiated through SDFFC 408 completion and notification operations into the regular data load/store stream initiated by the processor. In certain embodiments, according to an SDF programming model, the (e.g., "normal") access initiated by the node software running on the processor consists solely of token content writes, whereas the additional injected transfers will consist of the indicators to be shared between communication nodes running on different processors. Together, these combined data and indicator writes form the abstract tokens shared between nodes running on different processors in certain embodiments. In various embodiments, the CII (or any of various other suitable interfaces of processor 402) is additionally or alternatively used to provide to a requesting agent of system 400 - e.g., an agent of processor 402 or of another processor - an identifier a particular node of the SDF graph as being currently available to be a next node for execution.

In certain embodiments, a (e.g., single) Token Target Interface (TTI) of processor 402 is used to receive SDF tokens produced by other processors in the system 400. In certain embodiments, this includes both token content and/or remote indicator writes received as a result of notification performed by other nodes running on other processors. In certain embodiments, remote indicator writes are detected in the received request stream using write request snooping. For this purpose, in certain embodiments, the SDF Manager circuit 424 contains a set of control registers configured (for example) by a primary processor in the system, channel registers that define the respective remote indicator write snooping address ranges of one or more buffers, and schedule registers which variously identify, for a given node of the SDF graph, whether the node is currently qualified to be executed. In certain embodiments, the address of any write request received via the TTI is checked against the snooping address range bounds, e.g., and any write request falling within those bounds is tagged as a remote indicator write. In certain embodiments, each request received via the TTI, including remote indicator write requests, is by default passed on to one of the closely coupled local data memories (e.g., 120-0 to 120-(S-1)) of the processor, e.g., dependent on the memory address range in which the address of the request falls. Optionally, remote indicator writes can be filtered out such that these do not occupy memory space if not explicitly used by task software running on the processor.

In certain embodiments, a (e.g., single) (e.g., one-bit) Error Interface (EI) is used to flag an error resulting from an erroneous command(s) or command argument(s) supplied to SDF Manager circuit 424, e.g., to send an error indication to interrupt request controller 126.

In an illustrative scenario according to one embodiment, nodes C and D of graph 460 are each assigned to processor 402, which includes or otherwise supports the use of SDF protocol acceleration such as that which is provided with circuitry of SDF Manager circuit 424. Such SDF protocol acceleration is accessed, for example, from a datapath of processor 402 via SDFFC 408, which is able to execute specific custom operations or otherwise to direct commands to (e.g., to request information from) SDF Manager circuit 424. In the example embodiment shown, a scheduler 450 of SDF manager circuit 424 supports the maintaining and/or other access of up-to-date state information in schedule registers 452 - e.g., wherein some or all such state information is at a node level of granularity. By way of illustration and not limitation, in response to a node identification operation being executed on SDFFC 408 - e.g., from within a given task program (referred to as a task 'activity') - SDF Manager circuit 424 will access schedule registers 452 to determine whether any node representing another task is currently qualified to be executed. In one such embodiment, a scheduler() function of SDFFC 408 is adapted to generate one or more node identification requests for SDF Manager circuit 424, thus mitigating the need to repeatedly access channel-specific state information - with sdf_check requests, sdf_check_all requests or the like - until SDFFC 408 is able to identify a qualified node.

In the example embodiment shown, the scheduler() function of SDFFC 408 is able to execute a sdf_pick_task operation to generate a blocking version of a node identification request - e.g., wherein the schedulerQ function simply waits (e.g., stalls processor 402) until a task is qualified for execution, thereby saving power in absence of available tasks. In some embodiments, the schedulerQ function is able to additionally or alternatively execute a sdf_find_task operation to generate a non-blocking version of a node identification request.

In various embodiments, a request to access state information of one or more channel registers (such as a sdf_check request, or a sdf_check_all request) includes one or more parameters which directly or indirectly identify the channel(s) targeted by said request. By contrast, a node identification request - to access other state information of one or more status registers, according to some embodiments - does not identify any particular node, but instead relies upon a SDF Manager to select a currently qualified node (if any) from among multiple nodes.

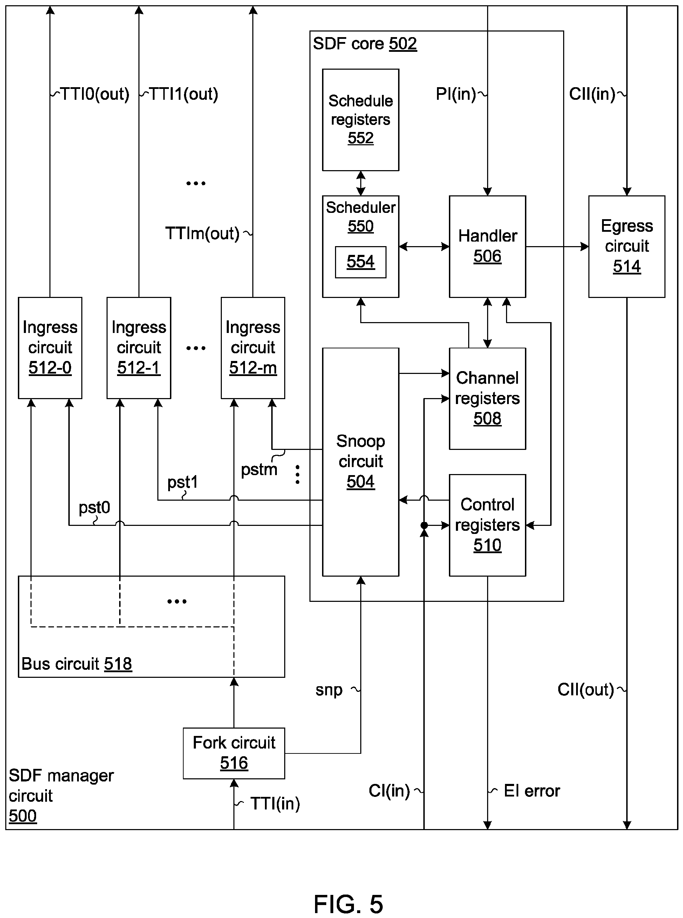

FIG. 5 illustrates a block diagram of a SDF Manager circuit 500 circuit according to an embodiment. In certain embodiments, configuration requests from the system (e.g., from processor 102 or another processor) are received via the CI interface and forwarded to a set of channel registers 508 and a set of control registers 510. In certain embodiments, any error occurring internal to SDF Manager circuit 500 can be flagged to the system via the EI interface connected to an error register(s) within the set of control register 510, e.g., as set by a handler 506 of a SDF core 502.

In certain embodiments, data reads and/or data writes from the system (e.g., other processor(s)) targeting that associated processor (e.g., processor 102 in FIG. 1) memories enter via the TTI interface. In certain embodiments, a fork circuit 516 (e.g., device) extracts, snoops or otherwise detects write requests from the incoming TTI request stream and forwards such requests (or at least a version or other indicator thereof) as communications snp to a snoop circuit 504. In certain embodiments, the snoop circuit 504 is used to detect remote indicator writes within the write stream. In certain embodiments (e.g., in parallel), the fork circuit 516 passes all requests (read and writes) onto an internal bus circuit 518 that routes requests to the proper target memory, e.g., based on the request address and the memory routing map implemented by the bus logic.

The depicted SDF Manager circuit 500 circuit in FIG. 5 includes a plurality of ingress circuits 512-0 to 512-m (e.g., where m is a positive integer). In certain embodiments, ingress circuits 512-0 to 512-m on each path to a processor memory are used to prevent race conditions between regular data writes and the special remote indicator writes that effectively serve as SDF synchronization markers. In certain embodiments, each ingress circuit 512-0 to 512-m automatically converts the last data write request preceding a remote indicator write request detected by the snoop circuit 504, into a posted write for which it expects a response. In certain embodiments, in the absence of native posted write and write response support in hardware, this can be done by each ingress circuit 512-0 to 512-m injecting a read request into its ingress output stream towards its target memory, whenever it receives a "post" trigger (e.g., one of the post triggers pst0, pst1,..., pstm shown) from the snoop circuit 504. In certain embodiments, upon receiving a response to the injected read, each ingress circuit 512-0 to 512-m will send a post response back to the snooper. In certain embodiments, the snoop circuit 504 waits until it has received a post response signal from each ingress circuit 512-0 to 512-m. In certain embodiments, only after receiving all post responses, will the snoop circuit 504 inform the channel registers 508 of the detected remote indicator write. In certain embodiments, this means that any update to channel registers 508 is only reflected after it is certain that any data writes that are supposed to precede a certain remote indicator write have reached their destination. In certain embodiments, this logic therefore eliminates any non-posted write bus logic required separately in the system.

In certain embodiments, read and/or write request received from a standard load/store unit in the processor data path enter the SDF Manager circuit 500 through the CII interface and are passed to the system via an egress circuit 514.

In certain embodiments, handler circuit 506 inside SDF Manager circuit 500 receives commands from the SDFFC (e.g., SDF circuit 108 in FIG. 1 or SDFFC 408 in FIG. 4) in the corresponding processor's data path. In certain embodiments, the handler 506 is to carry out all relevant SDF protocol phases in response to received commands, e.g., while working with respective information variously maintained in control registers 510, the channel registers 508, and in schedule registers 552. In certain embodiments, a notification command results in the handler 506 injecting indicator share write requests (e.g., which result in remote indicator writes received at other processors) in the CII stream of read/write requests. In certain embodiments, any notification-controlled writes receive priority over other (e.g., "normal") reads and writes on this interface, and hence as long as notification writes are pending, the processor may automatically stall, e.g., if it attempts to issue (e.g., "normal") (e.g., not SDF related) reads and writes via the CII interface. In certain embodiments, the order of initiating SDF remote indicator writes via the PI interface, followed by further (e.g., "normal") data writes via the CII interface, is guaranteed by this priority setting, e.g., which mitigates the risk of a potential race condition originating at the source of such writes.

In certain embodiments, via the CI interface, a standard register map reflecting the physical organization of the channel registers 508 is provided. In certain embodiments, by using this register map, standard memory-mapped I/O can be used by the system to configure registers and/or to read and thus observe their content for analysis and debug. In certain embodiments, the analysis and debug is provided via a (e.g., "normal") system interconnect and/or via a dedicated debug network.

In certain embodiments, via the PI interface, a "virtual" address map view on the channel registers 508 is provided to the SDFFC embedded in the processor. In certain embodiments, the PI interface allows three types of access to channel registers 508 from within the processor. For example, the PI interface allows access to registers via custom load/store operations to carry out an SDF protocol. In certain embodiments, these accesses have side-effects within SDF Manager channel registers 508, e.g., the access may lead to the modification of the values of one or more (e.g., multiple) registers. In certain embodiments, this may include registers that fall outside of the other (e.g., "normal") load/store byte access range, e.g., as specified via regular memory-mapped address and data type information. For instance, a custom load operation targeting the SDF Manager PI interface may specify a data vector to be returned by SDF Manager circuit 500 based on the reading of registers covered by the specified load address and data type range, but may in fact modify SDF Manager registers that even are located outside of that range.

In one such embodiment, such a PI interface allows standard scalar read access to a single register associated with a single terminal, with the response returned as a single (e.g., 32-bit) scalar value, as such behaving as a standard (e.g., 32-bit) load operation. Furthermore, such a PI interface allows standard vector read access to multiple equivalent registers that reside in different channels and are thus associated with multiple terminals of the same node, e.g., with the response returned as a vector of multiple bit elements (e.g., 16-bit elements or 32-bit elements), as such behaving as standard (e.g., 16-bit or 32-bit) element vector load operations.

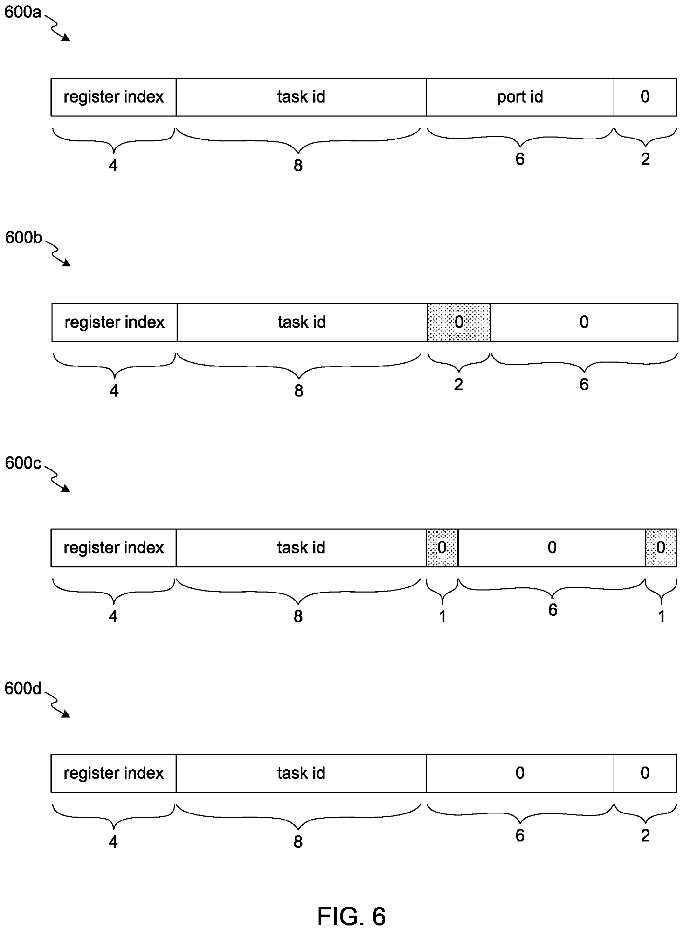

Although some embodiments are not limited in this regard, to support the above access types via a single unified address map, the channel registers 508 of SDF Manager circuit 500 are viewed through the PI interface as a virtual vector memory, e.g., with different access widths supported. In certain embodiments, the supported access widths are both scalar and per element of a vector (e.g., 32-bit scalar, 32-bit element vector, and 16-bit element vector). Examples of this are reflected in the different PI address compositions shown in FIG. 6.

In an embodiment, SDF core 502 provides functionality to maintain and provide access to state information in channel registers 508. For example, channel registers 508 comprise multiple sets of channel registers, where each such set corresponds to a different respective channel of a SDF graph. During runtime execution of an application, snoop circuit 504, handler 506 and/or other logic of SDF core 502 automatically and regularly updated provide various ones of channel registers 508 with up-to-date state information which (for example) is at a channel-specific level of granularity. Also during runtime execution, handler 506 and/or other suitable logic of SDF core 502 processes requests (e.g., received from a SDFFC via the PI) to variously access such state information of channel registers 508. The requested channel-specific state information is communicated, for example, via any of various output interfaces of SDF manager circuit 500.

Furthermore, scheduler 550 (or other suitable logic of SDF core 502) provides functionality to maintain and provide access to additional state information in schedule registers 552. In one such embodiments, schedule registers 552 comprise multiple sets of schedule registers, where each such set corresponds to a different respective node of the SDF graph. During runtime execution, scheduler 550 maintains various ones of schedule registers 552 with up-to-date state information which (for example) is at a node-specific level of granularity. For example, information in schedule registers 552 is automatically and regularly updated by scheduler 550 based on updates to the state information in channel registers 508. Also during runtime execution, scheduler 550 is operable operates - e.g., with handler 506 and/or other suitable logic of SDF core 502 - to processes node identification requests (e.g., received from a SDFFC via the PI) which variously access such state information of schedule registers 552.

For example, handler 506 is coupled to receive any of various node identification requests via the PI. Based on such a node identification request, handler 506 signals scheduler 550 to access schedule registers 552 to determine which one or more nodes (if any) currently satisfy a respective firing rule which qualifies said node for execution. The current qualification state of a given node is identified, for example, by a value in a corresponding QUALIFY register of schedule registers 552 - e.g., where said value is based on channel registers for the one or more channels which used by that node. For example, the qualification state is determined based on whether channel registers 508 indicate that, for each channel that communicates with the node in question, the channel has currently sufficient tokens (for an input channel) or has sufficient available space (for an output channel) to accommodate a firing by the node.

In an illustrative scenario according to one embodiment, SDF core 502 replies to a node identification request by identifying a next qualified node, which is selected by scheduler 550 from among multiple nodes which are currently qualified for execution. For example, a prioritization unit 554 of scheduler 550 selects the next qualified node, from among multiple currently qualified nodes, based on a prioritization of some or all SDF nodes relative to each other. By way of illustration and not limitation, the schedule registers for the given node comprise a PRIORITY register which identifies a schedule priority level which is currently assigned to that node.

FIG. 6 illustrates example formats 600a through 600d (with example bit widths under each field) for address decomposition at a protocol interface (PI) of an SDF manager according to an embodiment. In certain examples, a format includes a register index field (e.g., 4 bits wide), a task identification field (e.g., 4 bits wide), and/or a port identification field (e.g., 6 bits wide).

As shown in FIG. 6, the SDFFC (e.g., within a processor core) can issue commands to an SDF Manager pointing to a specific terminal by encoding the pair of task and port identifiers corresponding to that terminal in the address passed across the PI interface. Additionally or alternatively, a SDFFC can specify a complete node, by having the SDF Manager only consider the task identifier specified in the address. In some embodiments, a node identification request omits an identifier of a node - e.g., wherein a reply to the node identification request includes a task identifier or other suitable identifier of a a next qualified node.

In certain examples, to instruct SDF Manager how to interpret the address fields and what command to perform, additional side-band information (e.g., metadata) is provided with each custom load/store request passed from SDFFC to SDF Manager. In certain examples, this side-band information converts standard load/store operations into specialized commands for SDF Manager.

FIG. 7 illustrates an information command encoding 700 for SDFFC to SDF manager communications according to an embodiment. In certain examples, encoding 700 provides (e.g., via information side-band) seven different command modifiers, e.g., that can be independently enabled through individual information bits in the range [6:0] as illustrated in FIG. 7.

Hence, using the information bits, both atomic and fused commands resulting from custom operations supported on SDFFC can be specified to SDF Manager via the PI interface. In certain examples, if all information bits are de-asserted (e.g., cleared to 0), SDF Manager is to perform a standard load/store operation. If any of the information bits are asserted, a special load/store operation (e.g., for an SDF graph) will be performed. In certain examples, the choice between a load or store operation and the expected data type is independently controlled via standard write enable (we_n) and type signals on the PI interface. In certain examples, the ALL information flag (e.g., bit index [6]) controls whether the operation applies to all terminals of a node, or to a single terminal only. In certain examples, the BLOCKING flag is only relevant when the REQUEST flag is asserted as well, and modifies the corresponding request command into either a nonblocking or a blocking one. In certain examples, the 5 remaining flags indicate separate commands matching one-to-one with the (extended) SDF protocol phases REQUEST, COMPLETE, NOTIFY, RESERVE, and CANCEL as discussed herein.

In certain examples, by driving a specific combination of we_n, address and information signals on the PI interface, the SDFFC can issue commands to SDF Manager relating to either a specific single terminal identified through a TASK_ID and PORT_ID pair, or to all terminals of a specified node identified through a TASK_ID only. In certain examples, the SDF Manager can thus perform an SDF protocol phase action for either all terminals of a given task, or for each terminal individually, based on a single operation. In certain examples, the TASK_ID and PORT_ID provided in the PI address can be compared to the corresponding register fields of TERMINAL_ID registers contained in the channel registers of SDF Manager. This way, SDF Manager can determine which channels to operate on in response to a given command received from SDFFC.

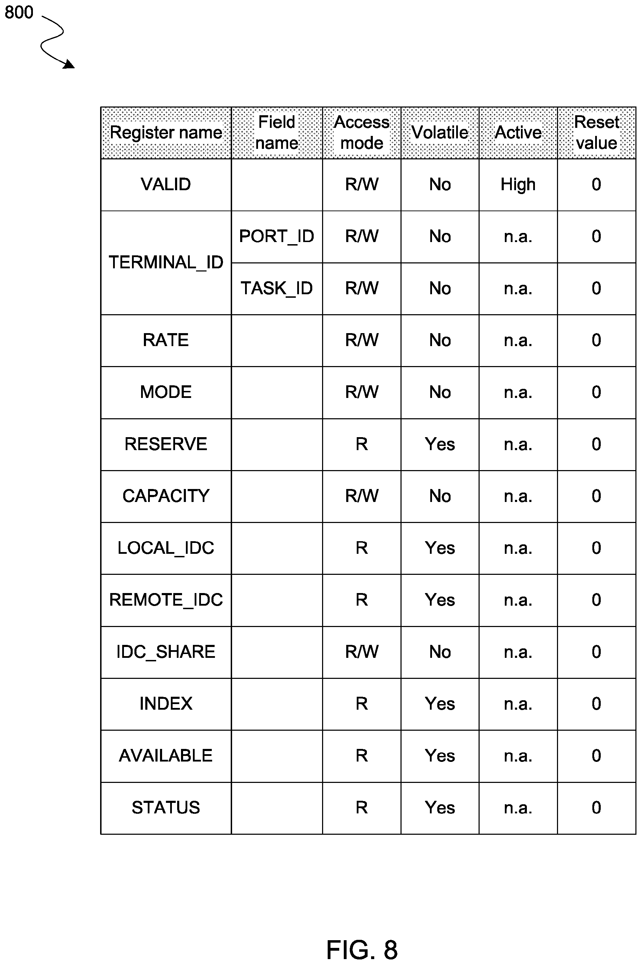

In certain examples, channel registers are physically organized into channels, e.g., with each channel holding the registers used to accelerate all SDF protocol phases for a single terminal. Examples of channel registers are depicted in FIG. 8.

FIG. 8 illustrates a table 800 listing one example of channel registers (e.g., channel registers 508 in FIG. 5) of an SDF manager for a single channel according to an embodiment. In the example embodiment shown, the channel registers for a given channel comprise a VALID register which is to indicate whether the contents of the corresponding channel are valid and active. The channel registers for the given channel further comprise a TERMINAL_ID register which includes a PORT_ID field and a TASK_ID field. The PORT_ID field is to be a repository of a unique identifier of a task port corresponding to the node terminal to which the channel in question is assigned. For example, during an initialization of a SDF graph, each port belonging to a given task receives a unique serially incrementing port identifier - e.g., where the assigned port identifiers start at zero (`0'), in order of port declaration, as part of the task interface. The TASK_ID field is to provide unique identifier of the task instantiated by the node to which the channel in question is assigned. For example, during an initialization of a SDF graph, each task assigned to a given processor receives a unique serially incrementing task identifier - e.g., wherein the assigned task identifiers start at zero ('0') in order of assignment.

In an embodiment, the channel registers for the given channel further comprise a RATE register which is to be a repository of a rate value, e.g., a number of tokens consumed (in case MODE specifies input) or produced (in case MODE specifies output) on each firing of the parent node of the terminal to which the channel in question is assigned. Furthermore, a MODE register is to identify a mode (i.e., input or output) of the terminal - e.g., wherein a RESERVE register is to identify a number of tokens or spaces already reserved for the terminal. Further still, a CAPACITY register is to indicate the capacity of an arc which is connected to the terminal (e.g., wherein the capacity is expressed as a number of tokens).

In an embodiment, the channel registers for the given channel further comprise a LOCAL _IDC register which is to be a repository of a local indicator value - e.g., a value of a 'get' indicator in a case where the MODE register specifies input, or a value of a 'put' indicator in a case where the MODE register specifies output. Furthermore, a REMOTE _IDC register is to be a repository of a remote indicator value - e.g., a value of a 'put' indicator in a case where the MODE register specifies input, or a value of a 'get' indicator in a case where the MODE register specifies output. Further still, an IDC_SHARE register is to be a repository of an address where the local indicator shall be shared as part of a notification.

In an embodiment, the channel registers for the given channel further comprise an INDEX register which is to be a repository of an index of a next available token or space. Furthermore, an AVAILABLE register is to indicate an available space (such as a number of available token). Further still, a STATUS register is to indicate the current status of the terminal to which the channel in question is assigned. In an embodiment, the current status is one of multiple possible states including an ARMED state, an UNARMED state, and an UNKNOWN state. The value of an INDEX register is valid only if the corresponding STATUS register is in an ARMED state or an UNARMED state. Similarly, the value of an AVAILABLE register is valid only if the corresponding STATUS register is in an ARMED state or an UNARMED state.

In certain embodiments, a status value of ARMED for a given channel indicates that sufficient tokens or spaces are available for that terminal and hence that the firing condition for the terminal is met. In certain embodiments, by combining the ARMED status of all terminals associated with a given node, the firing rule of that node can thus be checked. In certain embodiments, upon receiving a non-blocking request (e.g., check) or blocking request command for a given node via the PI interface (e.g., information flag ALL is asserted), the SDF Manager will examine the STATUS of all channels associated with terminals of the specified node, and only if all are set to ARMED, will determine the firing rule is met and return a value of true. In certain embodiments, if one or more relevant STATUS registers are not set to ARMED, the SDF Manager will determine the firing rule not to be met and return a value of false in response to a non-blocking check command, or wait with sending a response to a blocking request command. In the latter case, SDF Manager will in fact wait with sending a response until the firing rule for the task is met in certain embodiments. In absence of receiving a response to a request command, the processor associated with the SDF Manager will automatically stall until a response is received in certain embodiments. In certain embodiments, if the firing rule of a node is not met, a request performed for that node will automatically result in stalling of the processor and hence stalling of the node executed on that processor, thereby providing fully data-driven self-scheduling behavior for the node. Such stalling can be implemented using clock gating of the processor core, e.g., automatically saving power when no progress in processing can be made.

In certain embodiments, a SDF manager includes logic circuitry to implement a state machine according to which a given STATUS register, for a particular channel, variously transitions between an ARMED state, an UNARMED state, and an UNKNOWN state.

In an illustrative scenario according to one embodiment, a given STATUS register is set to the UNKNOWN state during some initialization, reset or other suitable event. In one such embodiment, the STATUS register is able to conditionally transition from the UNKNOWN state to one of the ARMED state or the UNARMED state, and must return to the UNKNOWN status before being able to transition, conditionally, to either one of the ARMED state or the UNARMED state. By way of illustration and not limitation, a transition of the STATUS register from the UNKNOWN state to the ARMED state is performed in response to a condition wherein the value indicated by the corresponding AVAILABLE register is greater than or equal to a sum of the respective values of the corresponding RATE register and the corresponding RESERVE register.

In one such embodiment, a transition of the STATUS register from the ARMED state back to the UNKNOWN state is performed in response to an event wherein the corresponding LOCAL_IDC register is updated, or the corresponding RESERVE register value is increased. In either case, a port that previously had sufficient tokens or spaces available to obtain ARMED status will now have less available, and hence may potentially become UNARMED in certain conditions. By changing the ARMED status back to UNKNOWN, a new assessment of the correct status will hence be triggered in certain embodiments.

Furthermore, a transition of the STATUS register from the UNKNOWN state to the UNARMED state is performed in response to a condition wherein the value indicated by the corresponding AVAILABLE register is less than a sum of the respective values of the corresponding RATE register and the corresponding RESERVE register.

Further still, a transition of the STATUS register from the UNARMED state back to the UNKNOWN state is performed in response to an event comprising a write to the corresponding REMOTE _IDC register, or a decrease of the corresponding RESERVE register value. In either case, a terminal that previously had insufficient tokens or spaces available resulting in UNARMED status will now have more available and hence may potentially become ARMED in certain conditions. By changing the UNARMED status back to the UNKNOWN status, a new assessment of the correct status will hence be triggered.

In certain embodiments, during configuration time, an SDF Graph API running on a processor in a multi-processor system will claim channels for each terminal of each node assigned to a given processor associated with SDF Manager. In certain embodiments, one of the processors (e.g., a "primary" processor) will record this information in the TERMINAL_ID register for a claimed channel. In certain embodiments, the MODE register, RATE register, CAPACITY register, and IDC_SHARE register for a given terminal configured as well, e.g., in the same channel. In certain embodiments, during application execution, whenever a SDF Manager receives a command from a SDFFC, the SDF Manager will operate on each channel that is covered by the task and port identifiers contained in the address and the ALL flag contained in information side-band signal associated with the SDFFC command.

In certain embodiments, the RESERVE register of channel registers is increased by RATE each time a "reservation" command is issued, or decreased by RATE each time a "cancellation" command is issued.

In certain embodiments, the LOCAL_IDC register of channel register is updated each time a "completion" command is issued. In certain embodiments, this update involves an increment of the LOCAL_IDC value by the RATE register value modulo twice the CAPACITY value.

In certain embodiments, the REMOTE_IDC register is updated each time the SDF Manager detects a remote indicator write (e.g., resulting from a "notification" that was initiated by a remote processor), while snooping incoming write requests on the TTI interface. In certain embodiment, the update involves the storing of the write data of the snooped write request in the REMOTE _IDC register of the channel identified by a channel index field derived from the snooped write request address.

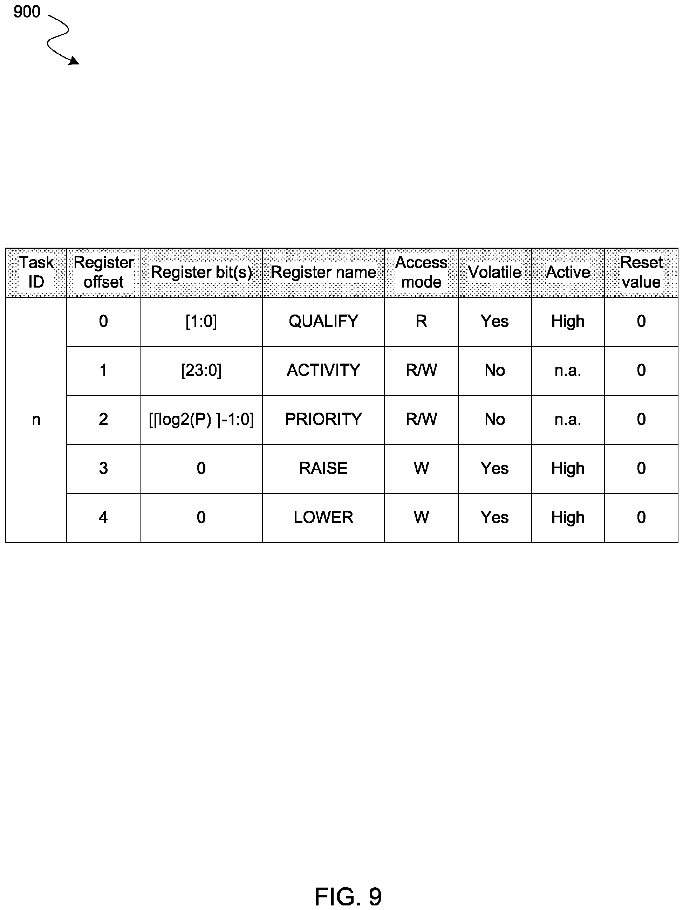

FIG. 9 illustrates a table 900 listing one example of schedule registers (e.g., schedule registers 552 in FIG. 5) of an SDF manager for a single SDF node (and corresponding task) according to an embodiment. In various embodiments, SDF management functionality is extended with additional registers (referred to herein as "schedule registers") that are to provide pre-calculated status information per task - e.g., wherein such status information identifies, for each of one or more tasks, whether the task is currently qualified for execution. In one such embodiment, qualification of a given task for execution requires that all channels associated with that task have their respective STATUS registers set to ARMED.

In the example embodiment shown, the schedule registers for a given node - the node representing a task which is assigned some task identifier n - comprise a QUALIFY register which is to indicate whether the task in question (with task identifier n) is currently qualified for execution. At a given time during runtime execution of an application, the QUALIFY register for a given task is in any of multiple states including a "qualified" state which indicates that a firing rule for the task in question is currently satisfied, and an "unqualified" state which indicates that said firing rule is not currently satisfied. A SDF Manager provides functionality to update such a QUALIFY register during the runtime execution - e.g., based on current state of the respective channel registers for one or more corresponding channels (e.g., arcs) which are to variously provide input to and/or output from to the node in question. In some embodiments, the SDF Manager further provides functionality to generate a reply to a node identification request based on the respective QUALIFY registers for one or more nodes. In one such embodiment, the reply identifies a particular node as currently being qualified, and as being a next node to be executed.

In some embodiments, the schedule registers for the given node further comprise an ACTIVITY register which is to be a repository of an identifier of a start address for the task in question (i.e., the task with task identifier n). In one such embodiment, a SDF Manager replies to a node identification request by providing such a start address to a requestor agent (such as a SDFFC from which the node identification request is received).

In an illustrative scenario according to one embodiment, a SDF Manager replies to a node identification request by identifying a next node to be executed, wherein the identified node is selected by the SDF Manager from among multiple nodes which are currently qualified for execution. Selection of the node is based, for example, on a prioritization of some or all SDF nodes relative to each other, although some embodiments are not limited in this regard. By way of illustration and not limitation, the schedule registers for the given node further comprise a PRIORITY register is to identify a schedule priority level which is currently assigned to the represented task.

In an example embodiment, an SDF Manager selects a next node to be scheduled for execution, where such selection is based on the respective priority levels of the currently qualified nodes. For example, the SDF Manager uses the respective priority levels to create one or more lists of nodes that are qualified for execution - e.g., where each such list corresponds to a different respective priority level, and wherein the nodes in a given one such list each have the same priority. In one such embodiment, the SDF Manager will examine each list for nodes qualified for execution - e.g., starting with the highest priority list. If a node qualified for execution is found in that list, it will be selected as the node to be identified in a reply to a node identification request. If no such node is found in the list, the SDF Manager will examine the list which corresponds to a next lower priority level, and return a qualified node from that list (if found). Otherwise, the SDF Manager will proceed through successively lower priority lists until either a qualified node is found, or no more lists are available to be reviewed. In some embodiments, traversal across all such lists is done in parallel - e.g., within a single clock cycle in hardware.

In one such embodiment, the schedule registers for the given node further comprise a RAISE register which is to indicate whether the prioritization indicated by the current value of the corresponding PRIORITY register is to be incrementally increased. In some embodiments, incrementally increasing the prioritization corresponds to increasing (or in another embodiment, decreasing) the value of the PRIORITY register. Alternatively or in addition, an increasing the prioritization is prevented if, for example, the PRIORITY register already represents a maximum possible prioritization value. In various embodiments, the RAISE register is automatically reset to '0' after a clock cycle in which the PRIORITY register is updated.

Furthermore, the schedule registers for the given node further comprise a LOWER register which is to indicate whether the prioritization indicated by the current value of the corresponding PRIORITY register is to be incrementally decreased. In some embodiments, incrementally decreasing the prioritization corresponds to decreasing (or in another embodiment, increasing) the value of the PRIORITY register. Alternatively or in addition, a decreasing the prioritization is prevented if, for example, the PRIORITY register already represents a lowest possible prioritization value. In various embodiments, the LOWER register is automatically reset to '0' after a clock cycle in which the PRIORITY register is updated.

In various embodiments, such priority changes can be initiated, for example, by hardware, by host software, or by firmware (e.g., including firmware running on a processor which includes, is coupled to, or is otherwise associated with the SDF Manager). In one such embodiment, a watchdog timer is used to automatically raise the priority of a given task - e.g., based on a determination that the task in question has not been scheduled after a threshold length period of time has passed. Alternatively or in addition, firmware running on a processor provides functionality to selectively lower a given task's priority - e.g., based on a determination by the firmware that the task has already been executed a sufficient number of times within a given period of time.

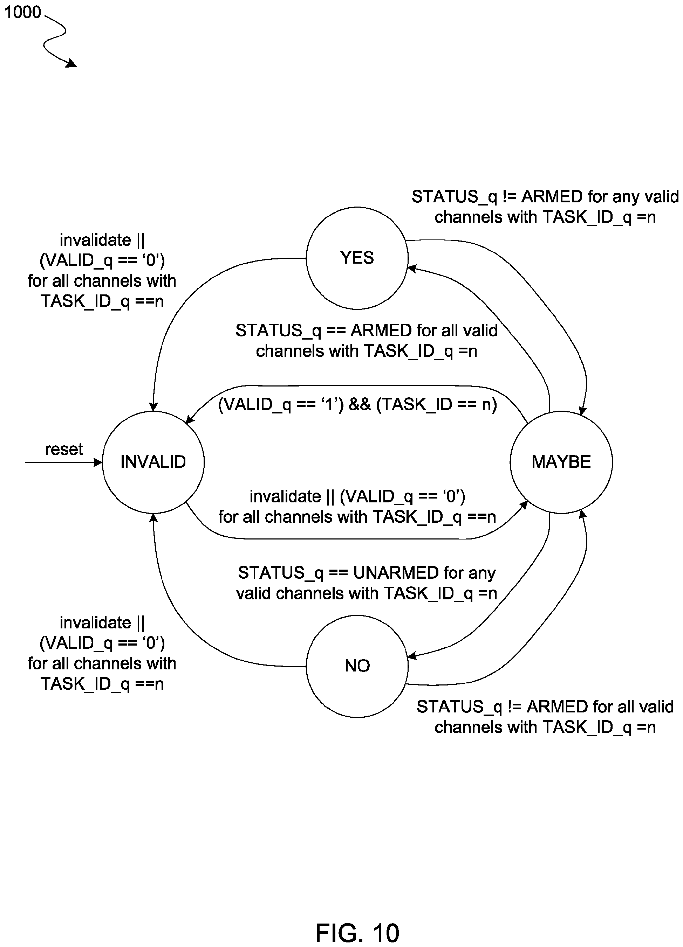

FIG. 10 illustrates a status transitions state machine 1000 for determining a qualification state for a node of a SDF graph (and a task which is represented by said node) according to an embodiment. In certain embodiments, SDF manager 124 (or SDF manager circuit 424, for example) comprises logic circuitry to implement the state machine 1000. In certain embodiments, SDF manager circuitry implements state machine 1000, for a particular node, by variously transitioning a corresponding QUALIFY register between an INVALID state, a YES (i.e., qualified) state, a NO (i.e., unqualified) state, and a MAYBE state.

In certain embodiments, the value of a QUALIFY register (for a given task which is assigned some task identifier n) is computed automatically - for example, recomputed one or more times during run time of an application - based on the respective value(s) of each STATUS register which corresponds to a channel that has a TASK_ID set to n, as well. Accordingly, the value of such a QUALIFY register is subject to change, over time, based on events that influence the one or more STATUS registers which correspond to the task in question.

In certain embodiments, the INVALID state indicates that the corresponding task is not currently a valid one - e.g., wherein the MAYBE state indicates that it is currently undetermined as to whether a firing rule for the (valid) task in question is satisfied. In one such embodiment, the NO state confirms that such a firing rule for the task is not currently satisfied - e.g., wherein, by contrast, the YES state confirms that said firing rule for the task is currently satisfied.

In an illustrative scenario according to one embodiment, such a QUALIFY register is set to the INVALID state during some initialization, reset or other suitable event. In one such embodiment, the QUALIFY register is able to be conditionally transitioned from the INVALID state to the MAYBE state. From the MAYBE state, the QUALIFY register is subject to being conditionally transitioned to any of the YES state, the NO state, or the INVALID state. From either of the YES state or the NO state, the QUALIFY register is subject to being conditionally transitioned to either of the MAYBE state or the INVALID state.

In the example embodiment shown, the QUALIFY register for a given task n is set to the INVALID state based on an initialization, reset or other suitable event. Alternatively or in addition, such a QUALIFY register is set to the INVALID state based on the receiving of an INVALIDATE command (e.g., from a SDFFC). Alternatively or in addition, such a QUALIFY register is set to the INVALID state where it is determined that, for each channel for which a corresponding TASK_ID is set to n, a corresponding VALID register of the channel registers is deasserted (e.g., each such channel has a VALID register set to '0' to indicate channel invalidity).

In one such embodiment, the QUALIFY register for a given task n is transitioned from the INVALID state to the MAYBE state where it is determined that, for at least one channel for which a corresponding TASK_ID is set to n, a corresponding VALID register of the channel registers is asserted (e.g., at least one channel has a VALID register set to '1' to indicate channel validity). Furthermore, the QUALIFY register for a given task n is transitioned from the MAYBE state to the YES state where it is determined that, for each currently valid channel for which a corresponding TASK_ID is set to n, a corresponding STATUS register of the channel registers is currently in an ARMED state. Further still, the QUALIFY register for a given task n is transitioned from the MAYBE state to the NO state where it is determined that, for at least one currently valid channel for which a corresponding TASK_ID is set to n, a corresponding STATUS register of the channel registers is currently in an UNARMED state.

Furthermore, the QUALIFY register for a given task n is transitioned from the YES state to the MAYBE state where it is determined that, for at least one currently valid channel for which a corresponding TASK_ID is set to n, a corresponding STATUS register of the channel registers is not currently in an ARMED state. Further still, the QUALIFY register for a given task n is transitioned from the NO state to the MAYBE state where it is determined that, for each currently valid channel for which a corresponding TASK_ID is set to n, a corresponding STATUS register of the channel registers is not currently in an UNARMED state.

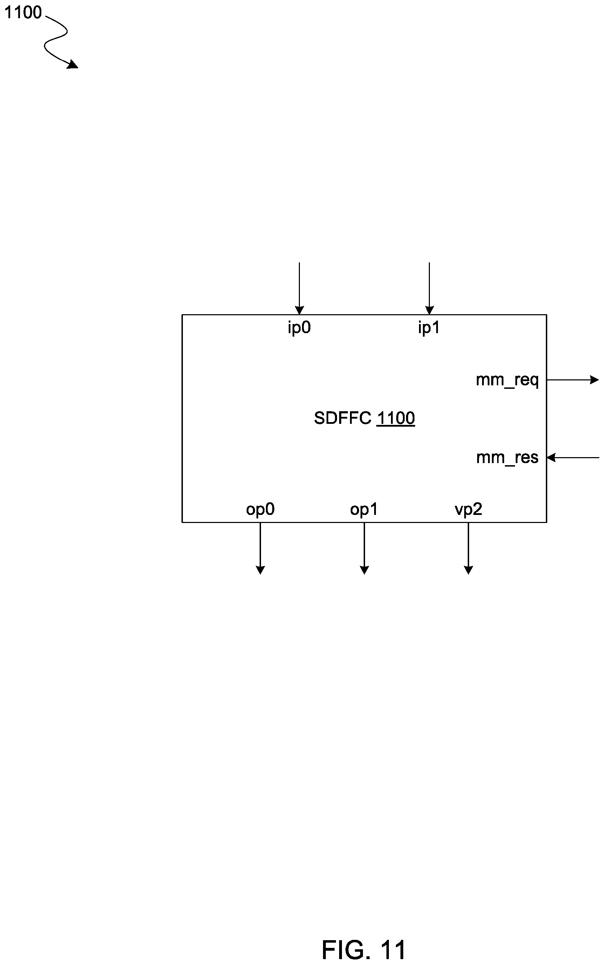

FIG. 11 illustrates input ports and output ports of a SDFFC 1100 (e.g., SDF circuit 108 or SDFFC 408) according to an embodiment. In certain embodiments, a plurality of scalar input ports (shown as two scalar input ports ip0 and ip1) receive arguments from scalar register files within the processor data path (e.g., processor 102 in FIG. 1). In certain embodiments, a plurality of scalar output ports (shown as two scalar output ports op0 and op1) produce results for scalar register files within the processor data path (e.g., processor 102 in FIG. 1). In certain embodiments, a (e.g., one) vector output port (shown as vp2) produces results for a vector register file in the processor data path (e.g., processor 102 in FIG. 1). In certain embodiments, a memory mapped request port (shown as mm_req) and a memory mapped response port (shown as mm_res) pair connects to a PI interface of a SDF Manager and comprises, for example, any of various common memory-mapped I/O signals (e.g., values). In certain embodiments, the signals for the mm_req request port include one or any combination of: valid, write-enable, data type, address, write data (e.g., unused), and side-band information signals. In certain embodiments, the signals for the mm_res response port include one or any combination of: a response valid signal and a response data signal. In certain embodiments, the response data signal is able to transfer a vector of data elements, e.g., with the highest numbered element containing a scalar result (such as, but not limited to, a Boolean representing whether the firing rule was met or not), and the other elements each representing a data element (such as, but not limited to, the index of the next available token or space at each terminal of the node for which a request was made).

### Exemplary Computer Architectures.

Detailed below are describes of exemplary computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

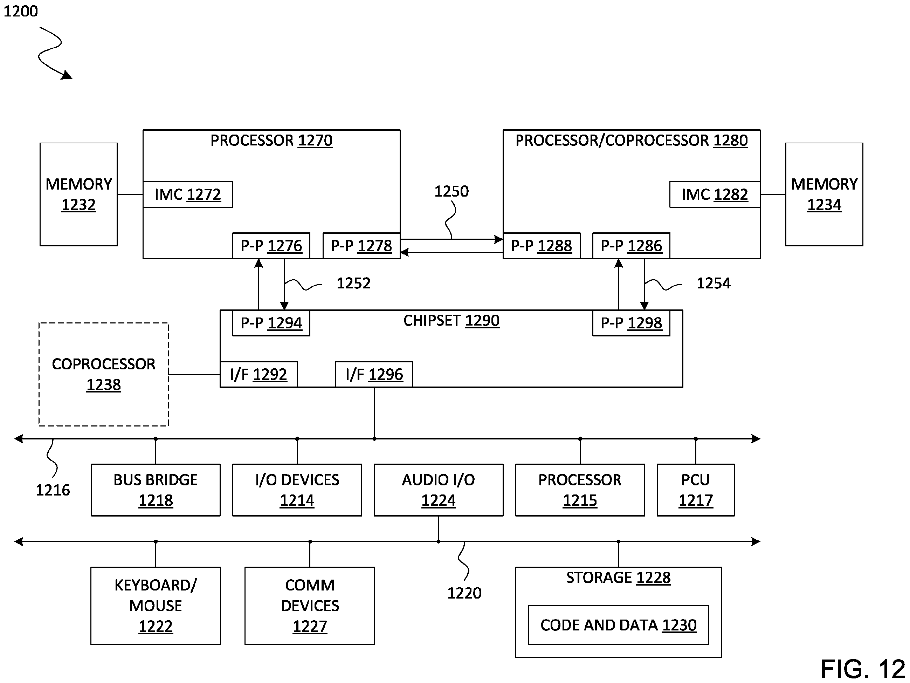

FIG. 12 illustrates an exemplary system. Multiprocessor system 1200 is a point-to-point interconnect system and includes a plurality of processors including a first processor 1270 and a second processor 1280 coupled via a point-to-point interconnect 1250. In some examples, the first processor 1270 and the second processor 1280 are homogeneous. In some examples, first processor 1270 and the second processor 1280 are heterogenous. Though the exemplary system 1200 is shown to have two processors, the system may have three or more processors, or may be a single processor system.

Processors 1270 and 1280 are shown including integrated memory controller (IMC) circuitry 1272 and 1282, respectively. Processor 1270 also includes as part of its interconnect controller point-to-point (P-P) interfaces 1276 and 1278; similarly, second processor 1280 includes P-P interfaces 1286 and 1288. Processors 1270, 1280 may exchange information via the point-to-point (P-P) interconnect 1250 using P-P interface circuits 1278, 1288. IMCs 1272 and 1282 couple the processors 1270, 1280 to respective memories, namely a memory 1232 and a memory 1234, which may be portions of main memory locally attached to the respective processors.

Processors 1270, 1280 may each exchange information with a chipset 1290 via individual P-P interconnects 1252, 1254 using point to point interface circuits 1276, 1294, 1286, 1298. Chipset 1290 may optionally exchange information with a coprocessor 1238 via an interface 1292. In some examples, the coprocessor 1238 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1270, 1280 or outside of both processors, yet connected with the processors via P-P interconnect, such that either or both processors' local cache information may be stored in the shared cache if a processor is placed into a low power mode.

Chipset 1290 may be coupled to a first interconnect 1216 via an interface 1296. In some examples, first interconnect 1216 may be a Peripheral Component Interconnect (PCI) interconnect, or an interconnect such as a PCI Express interconnect or another I/O interconnect. In some examples, one of the interconnects couples to a power control unit (PCU) 1217, which may include circuitry, software, and/or firmware to perform power management operations with regard to the processors 1270, 1280 and/or co-processor 1238. PCU 1217 provides control information to a voltage regulator (not shown) to cause the voltage regulator to generate the appropriate regulated voltage. PCU 1217 also provides control information to control the operating voltage generated. In various examples, PCU 1217 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1217 is illustrated as being present as logic separate from the processor 1270 and/or processor 1280. In other cases, PCU 1217 may execute on a given one or more of cores (not shown) of processor 1270 or 1280. In some cases, PCU 1217 may be implemented as a microcontroller (dedicated or general-purpose) or other control logic configured to execute its own dedicated power management code, sometimes referred to as P-code. In yet other examples, power management operations to be performed by PCU 1217 may be implemented externally to a processor, such as by way of a separate power management integrated circuit (PMIC) or another component external to the processor. In yet other examples, power management operations to be performed by PCU 1217 may be implemented within BIOS or other system software.

Various I/O devices 1214 may be coupled to first interconnect 1216, along with a bus bridge 1218 which couples first interconnect 1216 to a second interconnect 1220. In some examples, one or more additional processor(s) 1215, such as coprocessors, high-throughput many integrated core (MIC) processors, GPGPUs, accelerators (such as graphics accelerators or digital signal processing (DSP) units), field programmable gate arrays (FPGAs), or any other processor, are coupled to first interconnect 1216. In some examples, second interconnect 1220 may be a low pin count (LPC) interconnect. Various devices may be coupled to second interconnect 1220 including, for example, a keyboard and/or mouse 1222, communication devices 1227 and a storage circuitry 1228. Storage circuitry 1228 may be one or more non-transitory machine-readable storage media as described below, such as a disk drive or other mass storage device which may include instructions/code and data 1230 in some examples. Further, an audio I/O 1224 may be coupled to second interconnect 1220. Note that other architectures than the point-to-point architecture described above are possible. For example, instead of the point-to-point architecture, a system such as multiprocessor system 1200 may implement a multi-drop interconnect or other such architecture.

### Exemplary Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may include on the same die as the described CPU (sometimes referred to as the application core(s) or application processor(s)), the above described coprocessor, and additional functionality. Exemplary core architectures are described next, followed by descriptions of exemplary processors and computer architectures.

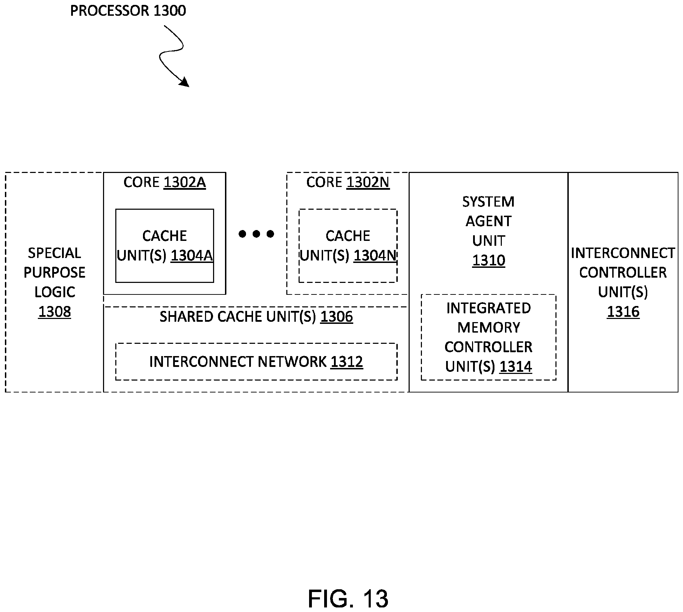

FIG. 13 illustrates a block diagram of an example processor 1300 that may have more than one core and an integrated memory controller. The solid lined boxes illustrate a processor 1300 with a single core 1302A, a system agent unit circuitry 1310, a set of one or more interconnect controller unit(s) circuitry 1316, while the optional addition of the dashed lined boxes illustrates an alternative processor 1300 with multiple cores 1302A-N, a set of one or more integrated memory controller unit(s) circuitry 1314 in the system agent unit circuitry 1310, and special purpose logic 1308, as well as a set of one or more interconnect controller units circuitry 1316. Note that the processor 1300 may be one of the processors 1270 or 1280, or co-processor 1238 or 1215 of FIG. 12.

Thus, different implementations of the processor 1300 may include: 1) a CPU with the special purpose logic 1308 being integrated graphics and/or scientific (throughput) logic (which may include one or more cores, not shown), and the cores 1302A-N being one or more general purpose cores (e.g., general purpose in-order cores, general purpose out-of-order cores, or a combination of the two); 2) a coprocessor with the cores 1302A-N being a large number of special purpose cores intended primarily for graphics and/or scientific (throughput); and 3) a coprocessor with the cores 1302A-N being a large number of general purpose in-order cores. Thus, the processor 1300 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 1300 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1304A-N within the cores 1302A-N, a set of one or more shared cache unit(s) circuitry 1306, and external memory (not shown) coupled to the set of integrated memory controller unit(s) circuitry 1314. The set of one or more shared cache unit(s) circuitry 1306 may include one or more mid-level caches, such as level 2 (L2), level 3 (L3), level 4 (L4), or other levels of cache, such as a last level cache (LLC), and/or combinations thereof. While in some examples ring-based interconnect network circuitry 1312 interconnects the special purpose logic 1308 (e.g., integrated graphics logic), the set of shared cache unit(s) circuitry 1306, and the system agent unit circuitry 1310, alternative examples use any number of well-known techniques for interconnecting such units. In some examples, coherency is maintained between one or more of the shared cache unit(s) circuitry 1306 and cores 1302A-N.

In some examples, one or more of the cores 1302A-N are capable of multi-threading. The system agent unit circuitry 1310 includes those components coordinating and operating cores 1302A-N. The system agent unit circuitry 1310 may include, for example, power control unit (PCU) circuitry and/or display unit circuitry (not shown). The PCU may be or may include logic and components needed for regulating the power state of the cores 1302A-N and/or the special purpose logic 1308 (e.g., integrated graphics logic). The display unit circuitry is for driving one or more externally connected displays.

The cores 1302A-N may be homogenous in terms of instruction set architecture (ISA). Alternatively, the cores 1302A-N may be heterogeneous in terms of ISA; that is, a subset of the cores 1302A-N may be capable of executing an ISA, while other cores may be capable of executing only a subset of that ISA or another ISA.

### Exemplary Core Architectures -In-order and out-of-order core block diagram.

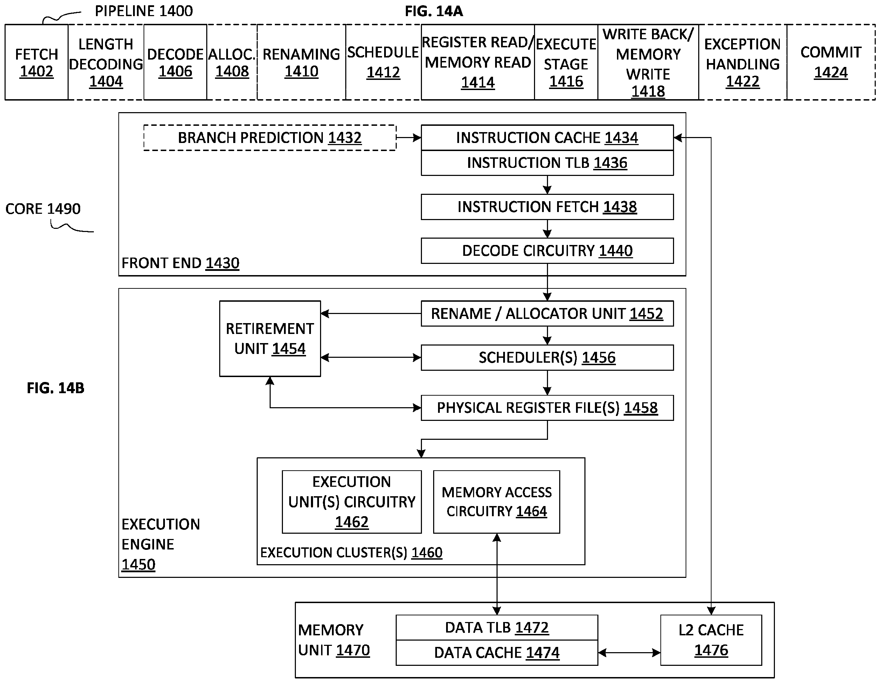

FIG. 14A is a block diagram illustrating both an exemplary in-order pipeline and an exemplary register renaming, out-of-order issue/execution pipeline according to examples. FIG. 14B is a block diagram illustrating both an exemplary example of an in-order architecture core and an exemplary register renaming, out-of-order issue/execution architecture core to be included in a processor according to examples. The solid lined boxes in FIGS. 14A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 14A, a processor pipeline 1400 includes a fetch stage 1402, an optional length decoding stage 1404, a decode stage 1406, an optional allocation (Alloc) stage 1408, an optional renaming stage 1410, a schedule (also known as a dispatch or issue) stage 1412, an optional register read/memory read stage 1414, an execute stage 1416, a write back/memory write stage 1418, an optional exception handling stage 1422, and an optional commit stage 1424. One or more operations can be performed in each of these processor pipeline stages. For example, during the fetch stage 1402, one or more instructions are fetched from instruction memory, and during the decode stage 1406, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1406 and the register read/memory read stage 1414 may be combined into one pipeline stage. In one example, during the execute stage 1416, the decoded instructions may be executed, LSU address/data pipelining to an Advanced Microcontroller Bus (AMB) interface may be performed, multiply and add operations may be performed, arithmetic operations with branch results may be performed, etc.

By way of example, the exemplary register renaming, out-of-order issue/execution architecture core of FIG. 14B may implement the pipeline 1400 as follows: 1) the instruction fetch circuitry 1438 performs the fetch and length decoding stages 1402 and 1404; 2) the decode circuitry 1440 performs the decode stage 1406; 3) the rename/allocator unit circuitry 1452 performs the allocation stage 1408 and renaming stage 1410; 4) the scheduler(s) circuitry 1456 performs the schedule stage 1412; 5) the physical register file(s) circuitry 1458 and the memory unit circuitry 1470 perform the register read/memory read stage 1414; the execution cluster(s) 1460 perform the execute stage 1416; 6) the memory unit circuitry 1470 and the physical register file(s) circuitry 1458 perform the write back/memory write stage 1418; 7) various circuitry may be involved in the exception handling stage 1422; and 8) the retirement unit circuitry 1454 and the physical register file(s) circuitry 1458 perform the commit stage 1424.

FIG. 14B shows a processor core 1490 including front-end unit circuitry 1430 coupled to an execution engine unit circuitry 1450, and both are coupled to a memory unit circuitry 1470. The core 1490 may be a reduced instruction set architecture computing (RISC) core, a complex instruction set architecture computing (CISC) core, a very long instruction word (VLIW) core, or a hybrid or alternative core type. As yet another option, the core 1490 may be a special-purpose core, such as, for example, a network or communication core, compression engine, coprocessor core, general purpose computing graphics processing unit (GPGPU) core, graphics core, or the like.

The front end unit circuitry 1430 may include branch prediction circuitry 1432 coupled to an instruction cache circuitry 1434, which is coupled to an instruction translation lookaside buffer (TLB) 1436, which is coupled to instruction fetch circuitry 1438, which is coupled to decode circuitry 1440. In one example, the instruction cache circuitry 1434 is included in the memory unit circuitry 1470 rather than the front-end circuitry 1430. The decode circuitry 1440 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1440 may further include an address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1440 may be implemented using various different mechanisms. Examples of suitable mechanisms include, but are not limited to, look-up tables, hardware implementations, programmable logic arrays (PLAs), microcode read only memories (ROMs), etc. In one example, the core 1490 includes a microcode ROM (not shown) or other medium that stores microcode for certain macroinstructions (e.g., in decode circuitry 1440 or otherwise within the front end circuitry 1430). In one example, the decode circuitry 1440 includes a micro-operation (micro-op) or operation cache (not shown) to hold/cache decoded operations, micro-tags, or micro-operations generated during the decode or other stages of the processor pipeline 1400. The decode circuitry 1440 may be coupled to rename/allocator unit circuitry 1452 in the execution engine circuitry 1450.

The execution engine circuitry 1450 includes the rename/allocator unit circuitry 1452 coupled to a retirement unit circuitry 1454 and a set of one or more scheduler(s) circuitry 1456. The scheduler(s) circuitry 1456 represents any number of different schedulers, including reservations stations, central instruction window, etc. In some examples, the scheduler(s) circuitry 1456 can include arithmetic logic unit (ALU) scheduler/scheduling circuitry, ALU queues, arithmetic generation unit (AGU) scheduler/scheduling circuitry, AGU queues, etc. The scheduler(s) circuitry 1456 is coupled to the physical register file(s) circuitry 1458. Each of the physical register file(s) circuitry 1458 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1458 includes vector registers unit circuitry, writemask registers unit circuitry, and scalar register unit circuitry. These register units may provide architectural vector registers, vector mask registers, general-purpose registers, etc. The physical register file(s) circuitry 1458 is coupled to the retirement unit circuitry 1454 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1454 and the physical register file(s) circuitry 1458 are coupled to the execution cluster(s) 1460. The execution cluster(s) 1460 includes a set of one or more execution unit(s) circuitry 1462 and a set of one or more memory access circuitry 1464. The execution unit(s) circuitry 1462 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1456, physical register file(s) circuitry 1458, and execution cluster(s) 1460 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1464). It should also be understood that where separate pipelines are used, one or more of these pipelines may be out-of-order issue/execution and the rest in-order.

In some examples, the execution engine unit circuitry 1450 may perform load store unit (LSU) address/data pipelining to an Advanced Microcontroller Bus (AMB) interface (not shown), and address phase and writeback, data phase load, store, and branches.

The set of memory access circuitry 1464 is coupled to the memory unit circuitry 1470, which includes data TLB circuitry 1472 coupled to a data cache circuitry 1474 coupled to a level 2 (L2) cache circuitry 1476. In one exemplary example, the memory access circuitry 1464 may include a load unit circuitry, a store address unit circuit, and a store data unit circuitry, each of which is coupled to the data TLB circuitry 1472 in the memory unit circuitry 1470. The instruction cache circuitry 1434 is further coupled to the level 2 (L2) cache circuitry 1476 in the memory unit circuitry 1470. In one example, the instruction cache 1434 and the data cache 1474 are combined into a single instruction and data cache (not shown) in L2 cache circuitry 1476, a level 3 (L3) cache circuitry (not shown), and/or main memory. The L2 cache circuitry 1476 is coupled to one or more other levels of cache and eventually to a main memory.

The core 1490 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1490 includes logic to support a packed data instruction set architecture extension (e.g., AVX1, AVX2), thereby allowing the operations used by many multimedia applications to be performed using packed data.

### Exemplary Execution Unit(s) Circuitry,

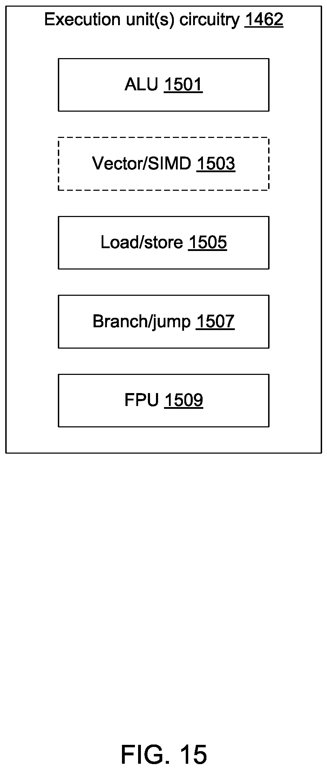

FIG. 15 illustrates examples of execution unit(s) circuitry, such as execution unit(s) circuitry 1462 of FIG. 14B. As illustrated, execution unit(s) circuity 1462 may include one or more ALU circuits 1501, optional vector/single instruction multiple data (SIMD) circuits 1503, load/store circuits 1505, branch/jump circuits 1507, and/or Floating-point unit (FPU) circuits 1509. ALU circuits 1501 perform integer arithmetic and/or Boolean operations. Vector/SIMD circuits 1503 perform vector/SIMD operations on packed data (such as SIMD/vector registers). Load/store circuits 1505 execute load and store instructions to load data from memory into registers or store from registers to memory. Load/store circuits 1505 may also generate addresses. Branch/jump circuits 1507 cause a branch or jump to a memory address depending on the instruction. FPU circuits 1509 perform floating-point arithmetic. The width of the execution unit(s) circuitry 1462 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Exemplary Register Architecture

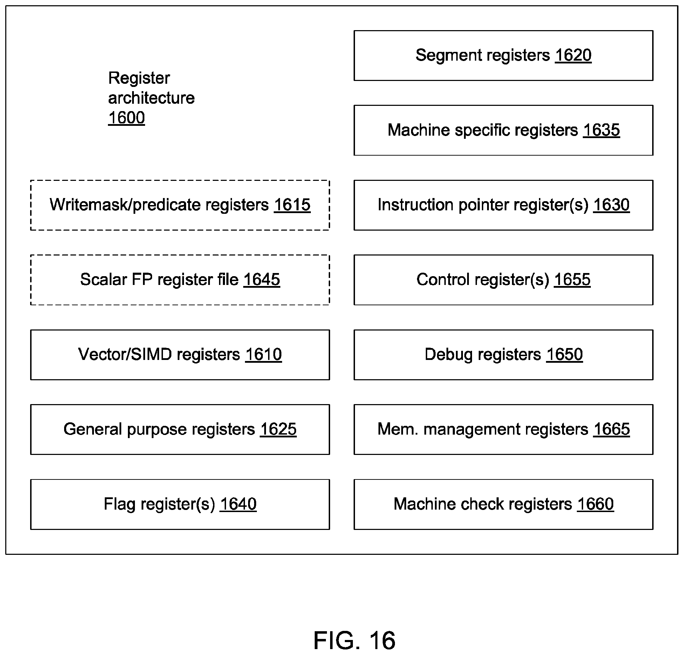

FIG. 16 is a block diagram of a register architecture 1600 according to some examples. As illustrated, the register architecture 1600 includes vector/SIMD registers 1610 that vary from 128-bit to 1,024 bits width. In some examples, the vector/SIMD registers 1610 are physically 512-bits and, depending upon the mapping, only some of the lower bits are used. For example, in some examples, the vector/SIMD registers 1610 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1600 includes writemask/predicate registers 1615. For example, in some examples, there are 8 writemask/predicate registers (sometimes called k0 through k7) that are each 16-bit, 32-bit, 64-bit, or 128-bit in size. Writemask/predicate registers 1615 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1615 corresponds to a data element position of the destination. In other examples, the writemask/predicate registers 1615 are scalable and consists of a set number of enable bits for a given vector element (e.g., 8 enable bits per 64-bit vector element).

The register architecture 1600 includes a plurality of general-purpose registers 1625. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1600 includes scalar floating-point (FP) register 1645 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1640 (e.g., EFLAGS, RFLAGS, etc.) store status and control information for arithmetic, compare, and system operations. For example, the one or more flag registers 1640 may store condition code information such as carry, parity, auxiliary carry, zero, sign, and overflow. In some examples, the one or more flag registers 1640 are called program status and control registers.

Segment registers 1620 contain segment points for use in accessing memory. In some examples, these registers are referenced by the names CS, DS, SS, ES, FS, and GS.

Machine specific registers (MSRs) 1635 control and report on processor performance. Most MSRs 1635 handle system-related functions and are not accessible to an application program. Machine check registers 1660 consist of control, status, and error reporting MSRs that are used to detect and report on hardware errors.

One or more instruction pointer register(s) 1630 store an instruction pointer value. Control register(s) 1655 (e.g., CR0-CR4) determine the operating mode of a processor (e.g., processor 1270, 1280, 1238, 1215, and/or 1300) and the characteristics of a currently executing task. Debug registers 1650 control and allow for the monitoring of a processor or core's debugging operations.

Memory (mem) management registers 1665 specify the locations of data structures used in protected mode memory management. These registers may include a GDTR, IDRT, task register, and a LDTR register.

Alternative examples may use wider or narrower registers. Additionally, alternative examples may use more, less, or different register files and registers. The register architecture 1600 may, for example, be used in physical register file(s) circuitry 1458.

The description herein includes numerous details to provide a more thorough explanation of the embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct connection, such as electrical, mechanical, or magnetic connection between the things that are connected, without any intermediary devices. The term "coupled" means a direct or indirect connection, such as a direct electrical, mechanical, or magnetic connection between the things that are connected or an indirect connection, through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The term "device" may generally refer to an apparatus according to the context of the usage of that term. For example, a device may refer to a stack of layers or structures, a single structure or layer, a connection of various structures having active and/or passive elements, etc. Generally, a device is a three-dimensional structure with a plane along the x-y direction and a height along the z direction of an x-y-z Cartesian coordinate system. The plane of the device may also be the plane of an apparatus which comprises the device.

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up - i.e. scaling down, or scaling up respectively) of a signal frequency relative to another parameter, for example, power supply level.

The terms "substantially," "close," "approximately," "near," and "about," generally refer to being within +/- 10% of a target value. For example, unless otherwise specified in the explicit context of their use, the terms "substantially equal," "about equal" and "approximately equal" mean that there is no more than incidental variation between among things so described. In the art, such variation is typically no more than +/-10% of a predetermined target value.

It is to be understood that the terms so used are interchangeable under appropriate circumstances such that the embodiments of the invention described herein are, for example, capable of operation in other orientations than those illustrated or otherwise described herein.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

The terms "left," "right," "front," "back," "top," "bottom," "over," "under," and the like in the description and in the claims, if any, are used for descriptive purposes and not necessarily for describing permanent relative positions. For example, the terms "over," "under," "front side," "back side," "top," "bottom," "over," "under," and "on" as used herein refer to a relative position of one component, structure, or material with respect to other referenced components, structures or materials within a device, where such physical relationships are noteworthy. These terms are employed herein for descriptive purposes only and predominantly within the context of a device z-axis and therefore may be relative to an orientation of a device. Hence, a first material "over" a second material in the context of a figure provided herein may also be "under" the second material if the device is oriented upside-down relative to the context of the figure provided. In the context of materials, one material disposed over or under another may be directly in contact or may have one or more intervening materials. Moreover, one material disposed between two materials may be directly in contact with the two layers or may have one or more intervening layers. In contrast, a first material "on" a second material is in direct contact with that second material. Similar distinctions are to be made in the context of component assemblies.

The term "between" may be employed in the context of the z-axis, x-axis or y-axis of a device. A material that is between two other materials may be in contact with one or both of those materials, or it may be separated from both of the other two materials by one or more intervening materials. A material "between" two other materials may therefore be in contact with either of the other two materials, or it may be coupled to the other two materials through an intervening material. A device that is between two other devices may be directly connected to one or both of those devices, or it may be separated from both of the other two devices by one or more intervening devices.

As used throughout this description, and in the claims, a list of items joined by the term "at least one of" or "one or more of" can mean any combination of the listed terms. For example, the phrase "at least one of A, B or C" can mean A; B; C; A and B; A and C; B and C; or A, B and C. It is pointed out that those elements of a figure having the same reference numbers (or names) as the elements of any other figure can operate or function in any manner similar to that described, but are not limited to such.

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

Techniques and architectures for scheduling an execution of a task are described herein. In the above description, for purposes of explanation, numerous specific details are set forth in order to provide a thorough understanding of certain embodiments. It will be apparent, however, to one skilled in the art that certain embodiments can be practiced without these specific details. In other instances, structures and devices are shown in block diagram form in order to avoid obscuring the description.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain embodiments also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain embodiments are not described with reference to any particular programming language. It will be appreciated that a variety of programming languages may be used to implement the teachings of such embodiments as described herein.

In one or more first embodiments, a synchronous data flow (SDF) manager circuit comprises first circuitry to perform a first access of one or more first registers during a runtime of an application which is modeled with a SDF graph which comprises multiple nodes each to represent a respective task of the application, and one or more channels each to provide a respective communication to or from a first node of the multiple nodes, wherein the one or more first registers each correspond to a different respective channel of the one or more channels, and where the first access is to determine, for each channel of the one or more channels, whether the channel is currently able to accommodate an execution of a first task of the application, wherein the first circuitry is further to perform, based on the first access, a second access of a second register which corresponds to the first node, wherein the second access is to provide a value of a first status parameter of the second register, the value to identify whether the first task is currently qualified to be executed, and second circuitry to perform a third access of the second register based on a request to identify a next task to be executed, the second circuitry further to generate a reply to the request based on the first status parameter.

In one or more second embodiments, further to the first embodiment, the reply is to indicate a failure to identify any task as currently being qualified to be executed.

In one or more third embodiments, further to the first embodiment or the second embodiment, based a failure to identify any node as representing a respective task which is currently qualified to be executed, the second circuitry is to delay a generation of the reply until a node is identified as being qualified to be executed.

In one or more fourth embodiments, further to any of the first through third embodiments, the first circuitry is further to perform a first update which sets the first status parameter to a first value which indicates that the first task is currently qualified to be executed, and the first update is to be based on a first indication, by the one or more first registers, of a first condition wherein for each input channel to the first node, a total number of tokens of the input channel is sufficient to accommodate the execution of the first task, and for each output channel from the first node, a total space available in the output channel is sufficient to accommodate the execution of the first task.

In one or more fifth embodiments, further to the fourth embodiment, the first circuitry is further to perform a second update which sets the first status parameter to a second value which indicates that the first task is not currently qualified to be executed, and the second update is to be based on a second indication, by the one or more first registers, of a second condition wherein for at least one input channel to the first node, a total number of tokens of the input channel is insufficient to accommodate the execution of the first task, or for at least one output channel from the first node, a total space available in the output channel is insufficient to accommodate the execution of the first task.

In one or more sixth embodiments, further to any of the first through third embodiments, the second circuitry to perform the third access comprises the second circuitry to access, based on the request, each of a second plurality of registers which correspond to different respective nodes of the SDF graph, wherein the second plurality of registers each comprise a respective status parameter which indicates whether the corresponding node is qualified to be executed.

In one or more seventh embodiments, further to the sixth embodiment, based on the request, the second circuitry is to detect a condition wherein multiple nodes are currently qualified to be executed, based on the condition, the second circuitry is to perform a selection of the first node from among the multiple nodes, the selection is to be based on a relative prioritization of the multiple nodes with respect to each other, and the reply is to identify the first node based on the selection.

In one or more eighth embodiments, further to the seventh embodiment, the SDF manager circuit further comprises third circuitry, coupled to the second circuitry, which is to receive, during the runtime of the application, information which indicates whether a priority of the first node is to be raised or lowered, and change the relative prioritization of the multiple nodes with respect to each other.

In one or more ninth embodiments, further to any of the first through third embodiments, based on the request, the second circuitry is further to access a third register which includes an identifier of a start address of the first task, and provide the identifier of the start address in the reply to indicate that the first task is a next task to be executed.

In one or more tenth embodiments, a method at a synchronous data flow (SDF) manager circuit, the method comprises performing a first access of one or more first registers during a runtime of an application which is modeled with a SDF graph which comprises multiple nodes each to represent a respective task of the application, and one or more channels each to provide a respective communication to or from a first node of the multiple nodes, wherein the one or more first registers each correspond to a different respective channel of the one or more channels, and where the first access determines, for each channel of the one or more channels, whether the channel is currently able to accommodate an execution of a first task of the application, based on the first access, performing a second access of a second register which corresponds to the first node, wherein the second access provides a value of a first status parameter of the second register, the value to identify whether the first task is currently qualified to be executed, performing a third access of the second register based on a request to identify a next task to be executed, and generating a reply to the request based on the first status parameter.

In one or more eleventh embodiments, further to the tenth embodiment, the reply indicates a failure to identify any task as currently being qualified to be executed.

In one or more twelfth embodiments, further to the tenth embodiment or the eleventh embodiment, the method further comprises based a failure to identify any node as representing a respective task which is currently qualified to be executed, delaying a generation of the reply until a node is identified as being qualified to be executed.

In one or more thirteenth embodiments, further to any of the tenth through twelfth embodiments, the method further comprises performing a first update which sets the first status parameter to a first value which indicates that the first task is currently qualified to be executed, wherein the first update is based on a first indication, by the one or more first registers, of a first condition wherein for each input channel to the first node, a total number of tokens of the input channel is sufficient to accommodate the execution of the first task, and for each output channel from the first node, a total space available in the output channel is sufficient to accommodate the execution of the first task.

In one or more fourteenth embodiments, further to the thirteenth embodiment, the method further comprises performing a second update which sets the first status parameter to a second value which indicates that the first task is not currently qualified to be executed, wherein the second update is based on a second indication, by the one or more first registers, of a second condition wherein for at least one input channel to the first node, a total number of tokens of the input channel is insufficient to accommodate the execution of the first task, or for at least one output channel from the first node, a total space available in the output channel is insufficient to accommodate the execution of the first task.

In one or more fifteenth embodiments, further to any of the tenth through twelfth embodiments, performing the third access comprises accessing, based on the request, each of a second plurality of registers which correspond to different respective nodes of the SDF graph, wherein the second plurality of registers each comprise a respective status parameter which indicates whether the corresponding node is qualified to be executed.

In one or more sixteenth embodiments, further to the fifteenth embodiment, the method further comprises based on the request, detecting a condition wherein multiple nodes are currently qualified to be executed, and based on the condition, performing a selection of the first node from among the multiple nodes, wherein the selection is based on a relative prioritization of the multiple nodes with respect to each other, and the reply identifies the first node based on the selection.

In one or more seventeenth embodiments, further to the sixteenth embodiment, the method further comprises receiving, during the runtime of the application, information which indicates whether a priority of the first node is to be raised or lowered, and changing the relative prioritization of the multiple nodes with respect to each other.

In one or more eighteenth embodiments, further to any of the tenth through twelfth embodiments, the method further comprises based on the request, accessing a third register which includes an identifier of a start address of the first task, and providing the identifier of the start address in the reply to indicate that the first task is a next task to be executed.

In one or more nineteenth embodiments, a system comprises a system bus, multiple processors each coupled to the system bus, the multiple processors comprising a first processor, a synchronous data flow (SDF) manager circuit coupled between the system bus and the first processor, the SDF manager circuit comprising first circuitry to perform a first access of one or more first registers during a runtime of an application which is modeled with a SDF graph which comprises multiple nodes each to represent a respective task of the application, and one or more channels each to provide a respective communication to or from a first node of the multiple nodes, wherein the one or more first registers each correspond to a different respective channel of the one or more channels, and where the first access is to determine, for each channel of the one or more channels, whether the channel is currently able to accommodate an execution of a first task of the application, wherein the first circuitry is further to perform, based on the first access, a second access of a second register which corresponds to the first node, wherein the second access is to provide a value of a first status parameter of the second register, the value to identify whether the first task is currently qualified to be executed, and second circuitry to perform a third access of the second register based on a request to identify a next task to be executed, the second circuitry further to generate a reply to the request based on the first status parameter.

In one or more twentieth embodiments, further to the nineteenth embodiment, the reply is to indicate a failure to identify any task as currently being qualified to be executed.

In one or more twenty-first embodiments, further to the nineteenth embodiment or the twentieth embodiment, based a failure to identify any node as representing a respective task which is currently qualified to be executed, the second circuitry is to delay a generation of the reply until a node is identified as being qualified to be executed.

In one or more twenty-second embodiments, further to any of the nineteenth through twenty-first embodiments, the first circuitry is further to perform a first update which sets the first status parameter to a first value which indicates that the first task is currently qualified to be executed, and the first update is to be based on a first indication, by the one or more first registers, of a first condition wherein for each input channel to the first node, a total number of tokens of the input channel is sufficient to accommodate the execution of the first task, and for each output channel from the first node, a total space available in the output channel is sufficient to accommodate the execution of the first task.

In one or more twenty-third embodiments, further to the twenty-second embodiment, the first circuitry is further to perform a second update which sets the first status parameter to a second value which indicates that the first task is not currently qualified to be executed, and the second update is to be based on a second indication, by the one or more first registers, of a second condition wherein for at least one input channel to the first node, a total number of tokens of the input channel is insufficient to accommodate the execution of the first task, or for at least one output channel from the first node, a total space available in the output channel is insufficient to accommodate the execution of the first task.

In one or more twenty-fourth embodiments, further to any of the nineteenth through twenty-first embodiments, the second circuitry to perform the third access comprises the second circuitry to access, based on the request, each of a second plurality of registers which correspond to different respective nodes of the SDF graph, wherein the second plurality of registers each comprise a respective status parameter which indicates whether the corresponding node is qualified to be executed.

In one or more twenty-fifth embodiments, further to the twenty-fourth embodiment, based on the request, the second circuitry is to detect a condition wherein multiple nodes are currently qualified to be executed, based on the condition, the second circuitry is to perform a selection of the first node from among the multiple nodes, the selection is to be based on a relative prioritization of the multiple nodes with respect to each other, and the reply is to identify the first node based on the selection.

In one or more twenty-sixth embodiments, further to the twenty-fifth embodiment, the SDF manager circuit further comprises third circuitry, coupled to the second circuitry, which is to receive, during the runtime of the application, information which indicates whether a priority of the first node is to be raised or lowered, and change the relative prioritization of the multiple nodes with respect to each other.

In one or more twenty-seventh embodiments, further to any of the nineteenth through twenty-first embodiments, based on the request, the second circuitry is further to access a third register which includes an identifier of a start address of the first task, and provide the identifier of the start address in the reply to indicate that the first task is a next task to be executed.

Besides what is described herein, various modifications may be made to the disclosed embodiments and implementations thereof without departing from their scope. Therefore, the illustrations and examples herein should be construed in an illustrative, and not a restrictive sense. The scope of the invention should be measured solely by reference to the claims that follow.

## Claims

1. A synchronous data flow (SDF) manager circuit comprising:
first circuitry to perform a first access of one or more first registers during a runtime of an application which is modeled with a SDF graph which comprises:
multiple nodes each to represent a respective task of the application, and
one or more channels each to communicate via a first node of the multiple nodes, wherein the one or more first registers each correspond to a different respective channel of the one or more channels, and where the first access is to determine, for each channel of the one or more channels, whether the channel is currently able to accommodate an execution of a first task of the application;
wherein the first circuitry is further to perform, based on the first access, a second access of a second register which corresponds to the first node, wherein the second access is to provide a value of a first status parameter of the second register, the value to identify whether the first task is currently qualified to be executed; and
second circuitry to perform a third access of the second register based on a request to identify a next task to be executed, the second circuitry further to generate a reply to the request based on the first status parameter.

2. The SDF manager circuit of claim 1, wherein the reply is to indicate a failure to identify any task as currently being qualified to be executed.

3. The SDF manager circuit of either of claim 1 or claim 2, wherein, based a failure to identify any node as currently being qualified to be executed, the second circuitry is to delay a generation of the reply until a node is identified as being qualified to be executed.

4. The SDF manager circuit of any of claim 1 through claim 3, wherein:
the first circuitry is further to perform a first update which sets the first status parameter to a first value which indicates that the first task is currently qualified to be executed; and
the first update is to be based on a first indication, by the one or more first registers, of a first condition wherein:
for each input channel to the first node, a total number of tokens of the input channel is sufficient to accommodate the execution of the first task; and
for each output channel from the first node, a total space available in the output channel is sufficient to accommodate the execution of the first task.

5. The SDF manager circuit of claim 4, wherein:
the first circuitry is further to perform a second update which sets the first status parameter to a second value which indicates that the first task is not currently qualified to be executed; and
the second update is to be based on a second indication, by the one or more first registers, of a second condition wherein:
for at least one input channel to the first node, a total number of tokens of the input channel is insufficient to accommodate the execution of the first task; or
for at least one output channel from the first node, a total space available in the output channel is insufficient to accommodate the execution of the first task.

6. The SDF manager circuit of any of claim 1 through claim 3, wherein the second circuitry to perform the third access comprises the second circuitry to access, based on the request, each of a second plurality of registers which correspond to different respective nodes of the SDF graph, wherein the second plurality of registers each comprise a respective status parameter which indicates whether the corresponding node is qualified to be executed.

7. The SDF manager circuit of claim 6, wherein:
based on the request, the second circuitry is to detect a condition wherein multiple nodes are currently qualified to be executed;
based on the condition, the second circuitry is to perform a selection of the first node from among the multiple nodes;
the selection is to be based on a relative prioritization of the multiple nodes with respect to each other; and
the reply is to identify the first node based on the selection.

8. The SDF manager circuit of claim 7, further comprising third circuitry, coupled to the second circuitry, which is to:
receive, during the runtime of the application, information which indicates whether a priority of the first node is to be raised or lowered; and
change the relative prioritization of the multiple nodes with respect to each other.

9. The SDF manager circuit of any of claim 1 through claim 3, wherein, based on the request, the second circuitry is further to:
access a third register which includes an identifier of a start address of the first task; and
provide the identifier of the start address in the reply to indicate that the first task is a next task to be executed.

10. A method at a synchronous data flow (SDF) manager circuit, the method comprising:
performing a first access of one or more first registers during a runtime of an application which is modeled with a SDF graph which comprises:
multiple nodes each to represent a respective task of the application, and
one or more channels each to communicate via a first node of the multiple nodes, wherein the one or more first registers each correspond to a different respective channel of the one or more channels, and where the first access determines, for each channel of the one or more channels, whether the channel is currently able to accommodate an execution of a first task of the application;
based on the first access, performing a second access of a second register which corresponds to the first node, wherein the second access provides a value of a first status parameter of the second register, the value to identify whether the first task is currently qualified to be executed;
performing a third access of the second register based on a request to identify a next task to be executed; and
generating a reply to the request based on the first status parameter.

11. The method of claim 10, wherein the reply indicates a failure to identify any task as currently being qualified to be executed.

12. The method of either of claim 10 or claim 11, further comprising:
performing a first update which sets the first status parameter to a first value which indicates that the first task is currently qualified to be executed;
wherein the first update is based on a first indication, by the one or more first registers, of a first condition wherein:
for each input channel to the first node, a total number of tokens of the input channel is sufficient to accommodate the execution of the first task; and
for each output channel from the first node, a total space available in the output channel is sufficient to accommodate the execution of the first task.

13. The method of any of claim 10 through claim 12, wherein performing the third access comprises accessing, based on the request, each of a second plurality of registers which correspond to different respective nodes of the SDF graph, wherein the second plurality of registers each comprise a respective status parameter which indicates whether the corresponding node is qualified to be executed.

14. The method of claim 13, further comprising:
based on the request, detecting a condition wherein multiple nodes are currently qualified to be executed; and
based on the condition, performing a selection of the first node from among the multiple nodes;
wherein:
the selection is based on a relative prioritization of the multiple nodes with respect to each other; and
the reply identifies the first node based on the selection.

15. The method of any of claim 10 through claim 12, further comprising:
based on the request, accessing a third register which includes an identifier of a start address of the first task; and
providing the identifier of the start address in the reply to indicate that the first task is a next task to be executed.
